# EUROPÄISCHE PATENTSCHRIFT

(11) **EP 4 236 212 B1**
(45) Veröffentlichungstag und Bekanntmachung des Hinweises auf die Patenterteilung: **09.04.2025**
(21) Anmeldenummer: 23169572.7
(22) Anmeldetag: 17.05.2018
(51) Int. Cl.: H04L 12/40, H04L 12/42

(54) **BASISELEMENT FÜR EINEN DATENBUSTEILNEHMER**
BASE ELEMENT FOR A DATA BUS SUBSCRIBER
ELÉMENT DE BASE POUR UN ABONNÉ D'UN BUS DE DONNÉES

(30) Priorität: 24.05.2017 DE 102017208836
(43) Veröffentlichungstag der Anmeldung: 30.08.2023
(62) Teilanmeldung aus: 18725513.8
(73) Patentinhaber: Wago Verwaltungsgesellschaft mbH, 32423 Minden (DE)
(72) Erfinder: JEROLM, Daniel, 49152 Bad Essen (DE); KIRSTE, Hans-Herbert, 32429 Minden (DE); SCHADDE, Frank, 32312 Lübbecke (DE); HUSE, Gerald, 32584 Löhne (DE)
(74) Vertreter: Bardehle Pagenberg Partnerschaft mbB Patentanwälte Rechtsanwälte

(56) Entgegenhaltungen:
- EP-A2- 0 440 982
- DE-A1- 19 935 192
- US-A- 4 594 724

## Beschreibung

### 1. Gebiet der Erfindung

Die vorliegende Erfindung betrifft ein Basiselement zum Verbinden eines Datenbusteilnehmers mit einem Lokalbus.

### 2. Stand der Technik

Datenbusteilnehmer werden zumeist in Automatisierungsanlagen verwendet.

Automatisierungsanlagen werden insbesondere zur Steuerung von industriellen Anlagen, Gebäuden sowie von Verkehrsmitteln eingesetzt. Für die Steuerung einer Automatisierungsanlage sind zumeist mehrere Sensoren und Aktoren notwendig. Diese überwachen und steuern den von der Anlage ausgeführten Prozess. Die unterschiedlichen Sensoren und Aktoren einer Automatisierungsanlage werden dabei häufig auch als Automatisierungsgeräte bezeichnet.

Diese Automatisierungsgeräte können entweder direkt mit einer Steuerung der Automatisierungsanlage verbunden werden, oder können zunächst mit Ein- und Ausgangsmodulen, die häufig auch als E/A-Module bezeichnet werden, verbunden werden. Diese können dann wiederum direkt mit der Steuerung verbunden werden. Die Automatisierungsgeräte können dabei entweder direkt in den E/A-Modulen integriert sein oder können mit diesen über Kabel oder kabellos verbunden sein.

Die Steuerung einer Automatisierungsanlage wird in der Regel mit Hilfe einer oder mehrerer speicherprogrammierbaren Steuerungen, SPS, bewerkstelligt. Die SPSs können hierbei hierarchisch oder dezentral in einer Automatisierungsanlage angeordnet sein. Dabei gibt es bei den SPS unterschiedliche Leistungsklassen, so dass diese je nach Rechen- und Speicherkapazität unterschiedliche Steuerungen und Regelungen übernehmen können. Eine SPS hat im einfachsten Fall Eingänge, Ausgänge, ein Betriebssystem (Firmware) und eine Schnittstelle, über die ein Anwenderprogramm geladen werden kann. Das Anwenderprogramm legt fest, wie die Ausgänge in Abhängigkeit von den Eingängen geschaltet werden sollen. Dabei können die Eingänge und Ausgänge mit den Automatisierungsgeräten und/oder den E/A-Modulen verbunden werden und anhand der im Anwenderprogramm hinterlegten Logik kann der Prozess, der von der Automatisierungsanlage durchgeführt wird, überwacht beziehungsweise gesteuert werden. Dabei wird die Überwachung des Prozesses durch die Sensoren bewerkstelligt und die Steuerung des Prozesses durch die Aktoren. Die Steuerung kann auch als zentrale Steuerung oder Zentraleinheit bezeichnet werden und übernimmt zumindest für ein mit der Steuerung verbundenes Automatisierungsgerät oder E/A-Modul die Steuerung.

Allerdings ist das direkte Verbinden der Automatisierungsgeräte mit der zumindest einen Steuerung oder der E/A-Module mit der zumindest einen Steuerung in Form einer parallelen Verdrahtung, d.h. von jedem Automatisierungsgerät oder jedem E/A-Modul wird je eine Leitung zur übergeordneten Steuerung verlegt, sehr aufwendig. Gerade bei steigendem Automatisierungsgrad einer Automatisierungsanlage wächst der Verkabelungsaufwand bei paralleler Verdrahtung. Dies ist mit großem Aufwand bei der Projektierung, Installation, Inbetriebnahme und Wartung verbunden.

Daher werden heutzutage in der Automatisierungstechnik zumeist Bussysteme eingesetzt, mit denen die Automatisierungsgeräte beziehungsweise die E/A-Module an die Steuerung angeschlossen werden können. Derartige Teilnehmer eines Bussystems werden auch als Busteilnehmer bezeichnet werden. Weil auf dem Bussystem Daten ausgetauscht werden, werden die Busteilnehmer auch häufig als Datenbusteilnehmer bezeichnet. Um die Anbindung der einzelnen Automatisierungsgeräte beziehungsweise der E/A-Module mit dem Bussystem noch weiter zu vereinfachen, werden heutzutage häufig einzelne Gruppen von Automatisierungsgeräten beziehungsweise E/A-Modulen mit Hilfe eines spezialisierten Lokalbusses zunächst untereinander zu einem Lokalbussystem verbunden und anschließend wird zumindest ein Teilnehmer dieses Lokalbusses mit dem Bussystem verbunden, welches mit der Steuerung verbunden ist. Dabei kann sich das Lokalbussystem von dem Bussystem unterscheiden, welches eingesetzt wird, um die Verbindung mit der Steuerung zu realisieren.

Beispiele von Lokalbussen mit daran angeschlossenen Teilnehmern sind beispielswiese in EP 0 440 982 A2, US 4,594,724 oder DE 199 35 192 A1 gezeigt und beschrieben.

Der mit dem Bussystem der Steuerung verbundene Teilnehmer einer Gruppe von Lokalbusteilnehmern wird häufig auch als Lokalbusmaster bezeichnet. Alternativ wird auch die Bezeichnung Kopfstation des Lokalbussystems verwendet. Dieser Lokalbusmaster kann gegenüber anderen Lokalbusteilnehmer weitere Logiken, Schaltungen oder Funktionalitäten beinhalten, die zur Anbindung an das Bussystem der Steuerung notwendig sind. Auch kann der Lokalbusmaster selbst eine SPS beinhalten. Auch kann dieser Teilnehmer Logiken und Schaltungen zur Umsetzung zwischen den zwei Bussystemen aufweisen. Der Lokalbusmaster kann daher auch als Gateway oder Busumsetzer ausgebildet sein und sorgt für eine Umsetzung der im Format des einen Bussystems vorliegenden Daten in das Format des Lokalbussystems und umgekehrt. Zumeist aber nicht zwingend, ist der Lokalbusmaster auf die Anbindung des Lokalbusses an den übergeordneten Bus spezialisiert.

Die zum Einsatz kommenden Lokalbusse sind zumeist auf die speziellen Einsatzerfordernisse der Automatisierungsgeräte beziehungsweise E/A-Module abgestimmt oder berücksichtigen deren spezielle Hardwareausgestaltung. Dabei bilden die Gruppen an Automatisierungsgeräten beziehungsweise E/A-Modulen des Lokalbussystems zumeist eine Untergruppe der Automatisierungsanlage zur Ausführung einer speziellen Aufgabe in dem von der Automatisierungsanlage ausgeführten Prozess. Die auf den Bussen ausgetauschten Daten werden auch häufig als Prozessdaten bezeichnet, weil diese Daten Informationen zur Regelung beziehungsweise Steuerung des von der Automatisierungsanlage ausgeführten Prozesses beinhaltet. Diese Prozessdaten können dabei unter anderem Messdaten, Steuerungsdaten, Zustandsdaten und/oder andere Informationen umfassen. Entsprechend des verwendeten Busprotokolls können diesen Prozessdaten andere Daten vorangestellt (*engl.* Header) oder angehängt (*engl.* Tail) sein. Diese anderen Daten können Informationen bezüglich der Prozessdaten beinhalten, oder Informationen bezüglich einer internen Kommunikation auf dem Lokalbus beinhalten. Hierbei ist eine Vielzahl von unterschiedlichen Informationen bekannt, die entsprechend des verwendeten Busprotokolls den Prozessdaten vorangestellt oder angefügt werden können.

Ein Ringbus ist dabei eine spezialisierte Form des Lokalbusses, wie zum Beispiel aus US 5,472,347 A bekannt. In einem Ringbus sind die Datenbusteilnehmer, zum Beispiel die Automatisierungsgeräte beziehungsweise E/A-Module, jeweils mit ihren direkt benachbarten Datenbusteilnehmern verbunden und Daten werden der Reihe nach von einem zum anderen Datenbusteilnehmer weitergeleitet. Es werden also nicht allen Datenbusteilnehmern gleichzeitig die Daten zugesandt, sondern der Reihe nach, wobei ein Datenbusteilnehmer von seinem vorgelagerten Datenbusteilnehmer Daten erhält und Daten an seinen nachgelagerten Datenbusteilnehmer weiterleitet. Zwischen dem Erhalt der Daten und der Weiterleitung kann der Datenbusteilnehmer die erhaltenen Daten verarbeiten. Wenn die Daten den letzten Datenbusteilnehmer in der Reihe erreicht haben, so werden die Daten vom letzten Datenbusteilnehmer wieder der Reihe nach zurück an den ersten Datenbusteilnehmer zurückgeleitet. Das Zurückleiten kann dabei entweder durch alle Datenbusteilnehmer geschehen oder an diesen vorbei mit Hilfe einer Bypassleitung. Der Ringbus hat also einen Abwärtsstrom und Aufwärtsstrom von Daten. Die Daten in einem Ringbus werden oft nicht in adressierter Paketform übertragen, sondern in Form von Zyklusrahmen, die alle Datenbusteilnehmer durchlaufen. Dabei sind Zyklusrahmen eine sich zyklisch wiederholende Abfolge von Telegrammen / Datenpaketen. Dabei können mehrere Telegramme / Datenpakete in einem Zyklusrahmen vorhanden sein. Zyklusrahmen werden dabei zyklisch beispielweise in einem festen Zeitabstand vom Lokalbusmaster zu den Datenbusteilnehmern gesendet. Diese Zyklusrahmen beinhalten zumeist einen Kopfteil, einen Informationsteil und einen Prüfsummenteil. Der Informationsteil kann dabei die die Telegramme / Datenpakete tragen, die selbst Prozessdaten tragen können und dieser Teil kann dementsprechend auch als Prozessdatenteil bezeichnet werden. In diesem Prozessdatenteil sind die Prozessdaten derart angeordnet, dass die Datenbusteilnehmer auf Grund der Position der Prozessdaten innerhalb des Prozessdatenteils in dem Zyklusrahmen, beispielsweise innerhalb eines zugeordneten zusammenhängenden Datenblocks, diejenigen Prozessdaten erkennen können, die an den Datenbusteilnehmer gerichtet sind. An den Datenbusteilnehmer gerichtete Prozessdaten sind diejenigen Prozessdaten, die an einem Datenbusteilnehmer dazu geeignet sind an diesem Datenbusteilnehmer eine Steuerung, Regelung oder Auswertung durchführen, insbesondere Messdaten abzuholen und Ausgangswerte an Ausgängen des Datenbusteilnehmers zu setzen.

In einem Ringbus wird der Zyklusrahmen von einem zum anderen Datenbusteilnehmer weitergegeben. Dabei empfängt zu jeder gegebenen Zeit ein Datenbusteilnehmer von seinem vorgelagerten Datenbusteilnehmer immer nur einen Teil des Zyklusrahmens. Wenn die in diesem Teil enthaltenen Daten vom Datenbusteilnehmer verarbeitet worden sind, wird der Teil an den nachgelagerten Datenbusteilnehmer weitergeleitet und gleichzeitig wird von dem vorgelagerten Datenbusteilnehmer ein neuer Teil des Zyklusrahmens empfangen. Auf diese Weise passieren alle Teile des Zyklusrahmens sequentiell alle Datenbusteilnehmer.

In modernen Bussystemen ist es möglich, dass Datenbusteilnehmer, auch während des eigentlichen Betriebes des Busses, dem Bus hinzuzugefügt, beziehungsweise von diesem entfernt werden können. Für die korrekte Funktionsweise des Busses ist es notwendig, dass die den Bus kontrollierende oder steuernde Einheit, also der Lokalbusmaster oder die SPS, zu jedem Zeitpunkt darüber informiert ist, dass das Bussystem vollständig ist und dass alle Datenbusteilnehmer kommunikationsbereit sind.

Hierfür wird ein Statussignal durch alle auf dem Bus angeordneten Datenbusteilnehmer geleitet, so dass beispielsweise eine logische Eins (High-Zustand) oder eine logische Null (Low-Zustand) die Vollständigkeit und/oder die Kommunikationsbereitschaft von allen auf dem Bus angeordneten Datenbusteilnehmer anzeigt.

Um das Hinzufügen und/oder Entfernen von Datenbusteilnehmern zu erleichtern können Basiselemente eingesetzt werden, die zumindest teilweise den Bus selbst bilden und die mit den Datenbusteilnehmern verbunden werden können. Es ist die Aufgabe der vorliegenden Erfindung ein verbessertes Basiselement bereitzustellen, mit dem das Hinzufügen und/oder Entfernen von Datenbusteilnehmern vereinfacht wird.

### 3. Zusammenfassung der Erfindung

Diese Aufgabe wird mit einem Basiselement entsprechend dem Anspruch 1 und einem System entsprechend dem Anspruch 8 gelöst. Vorteilhafte Ausführungsformen sind in den Unteransprüchen beschrieben.

Nur zum besseren Verständnis werden nachfolgend Aspekte zumindest eines Datenbusteilnehmers beschrieben, der mit dem beanspruchten Basiselement verwendet werden kann.

Ein beispielhafter Datenbusteilnehmer kann einen Statussignaleingang zum Empfang eines Statussignals von einem nachgelagerten Datenbusteilnehmer oder einer Abschlusseinheit aufweisen. Das Statussignal kann dabei einen ersten Statussignalwert aufwiesen. Dieser erste Statussignalwert kann entsprechend des Empfangs am Statussignaleingang auch Eingangsstatussignalwert, Eingangsstatuswert, oder Eingangswert bezeichnet werden. Der Statussignalwert kann dabei von einem nachgelagerten Datenbusteilnehmer stammen, also einem Datenbusteilnehmer, der dem Datenbusteilnehmer physikalisch unmittelbar oder mittelbar auf dem Lokalbus folgt. Nachgelagert ist dabei ein Datenbusteilnehmer zum Beispiel, wenn dieser an einer Position auf dem Lokalbus angeordnet ist, die der Position des Datenbusteilnehmers nachfolgt. Alternativ kann der erste Statussignalwert auch von einer Abschlusseinheit stammen. Eine Abschlusseinheit kann dabei an den letzten Datenbusteilnehmer im Lokalbus angeschlossen werden und kann an einem Statussignalausgang der Abschlusseinheit einen bestimmten Statussignalwert bereitstellen. Unabhängig davon, ob der Statussignalwert von einem nachgelagerten Datenbusteilnehmer oder einer Abschlusseinheit bereitgestellt wird, so kann dieser Statussignalwert als Ausgangssignalstatuswert, Ausgangsstatuswert, oder Ausgangswert bezeichnet werden, weil dieser am Statussignalausgang der Abschlusseinheit oder dem Datenbusteilnehmer anliegt. Der Statussignalwert kann einen diskreten Statussignalwert annehmen, beispielsweise kann dieser Statussignalwert einen High-Zustand (logische Eins) oder einen Low-Zustand (logische Null) einnehmen.

Der beispielhafte Datenbusteilnehmer kann auch einen Statussignalausgang aufweisen zur Bereitstellung eines Statussignals an einen vorgelagerten Datenbusteilnehmer oder an einen Lokalbusmaster. Das Statussignal kann dabei einen zweiten Statussignalwert aufweisen. Dieser zweite Statussignalwert kann entsprechend der Ausgabe am Statussignalausgang auch Ausgangsstatussignalwert, Ausgangsstatuswert, oder Ausgangswert bezeichnet werden. Der vorgelagerte Datenbusteilnehmer kann ein Datenbusteilnehmer sein, der dem sendenden Datenbusteilnehmer physikalisch unmittelbar oder mittelbar im Lokalbus vorausgeht beziehungsweise der Lokalbusmaster sein, der den ersten Datenbusteilnehmer im Lokalbus darstellt. Vorgelagert ist dabei ein Datenbusteilnehmer oder der Lokalbusmaster zum Beispiel, wenn dieser an einer Position auf dem Lokalbus angeordnet ist, die der Position des Datenbusteilnehmers vorhergeht. Der Datenbusteilnehmer kann dabei angepasst sein den zweiten Statussignalwert des bereitgestellten Statussignals basierend auf einer logischen Verknüpfung von einer Kommunikationsbereitschaft des Datenbusteilnehmers und des ersten Statussignals bereitzustellen. Liegt am Statussignaleingang des Datenbusteilnehmers beispielsweise ein Statussignal an, welches einen ersten Statussignalwert aufweist, der anzeigt, dass der nachgelagerte Datenbusteilnehmer kommunikationsbereit ist, so kann der Datenbusteilnehmer diesen ersten Statussignalwert an seinem Statussignalausgang als zweiten Statussignalwert ausgeben, sobald der Datenbusteilnehmer selbst kommunikationsbereit ist. In diesem Fall entsprechen sich also der erste und zweite Statussignalwert. Wenn der erste Statussignalwert am Statussignaleingang anzeigt, dass der nachgelagerte Datenbusteilnehmer noch nicht kommunikationsbereit ist, so kann auch bei Kommunikationsbereitschaft des empfangenen Datenbusteilnehmers der zweite Statussignalwert erst dann auf den ersten Statussignalwert geändert werden, wenn auch der erste Statussignalwert anzeigt, dass der nachgelagerte Datenbusteilnehmer kommunikationsbereit ist. Der erste und der zweite Statussignalwert können dabei diskrete Zustände annehmen, und ein spezieller definierter diskreter Zustand kann anzeigen, dass ein Datenbusteilnehmer kommunikationsbereit ist. D.h. wenn der Statussignalwert empfangen über den Statussignaleingang als ein logischer Zustand betrachten werden kann, also eine logische Eins oder eine logische Null ist, und die Kommunikationsbereitschaft ebenfalls mit einer logischen Eins oder logischen Null ausgedrückt werden kann, so wird nur ein entsprechender Statussignalwert an dem Statussignalausgang des Datenbusteilnehmers bereitgestellt, sofern sich die logischen Zustände entsprechen. D.h. nur wenn der erste Statussignalwert anzeigt, dass der nachgelagerte Datenbusteilnehmer kommunikationsbereit ist und der Datenbusteilnehmer selbst kommunikationsbereit ist, dann wird der zweite Statussignalwert auf den ersten Statussignalwert geändert. Das Verhalten lässt sich mit einer UND Verknüpfung *(engl.* AND) erzeugen. Die Kommunikationsbereitschaft kann dabei mit einer logischen Eins angezeigt werden und der erste Statussignalwert kann negiert werden, so dass wenn beide einen logischen Eins Zustand haben auch die UND-Verknüpfung einen logischen Eins Zustand anzeigt. Dieser Verknüpfungswert wird dann erneut negiert und als zweiter Statussignalwert ausgegeben. Die logische Verknüpfung kann dementsprechend derart eingerichtet sein, dass der erste Statussignalwert und der zweite Statussignalwert einen gleichen diskreten Zustand annehmen, wenn der Datenbusteilnehmer kommunikationsbereit ist. Dabei kann die logische Verknüpfung derart eingerichtet sein, den ersten Statussignalwert auf einen festen Zustand zu setzen, wenn der Datenbusteilnehmer noch nicht kommunikationsbereit ist und ansonsten den Zustand zu ändern. Mit anderen Worten kann auch gesagt werden, der zweite Statussignalwert, der von der Abschlusseinheit vorgegeben wird und der die Kommunikationsbereitschaft anzeigt, wird von der Abschlusseinheit bis zum Lokalbusmaster durch den Lokalbus geschleift und zwar in Abhängigkeit der Kommunikationsbereitschaft der jeweiligen Datenbusteilnehmer. Es kann auch gesagt werden, es besteht eine Statussignalleitung zwischen der Abschlusseinheit und dem Lokalbusmaster, wobei diese Statussignalleitung erst dann vollständig ist oder den die Kommunikationsbereitschaft anzeigenden Statussignalwert annimmt, wenn alle Datenbusteilnehmer kommunikationsbereit sind. Bevor nicht alle Datenbusteilnehmer kommunikationsbereit sind kann am Lokalbusmaster ein anderer Zustand an der Signalleitung anliegen. Es kann auch gesagt werden, dass die Statussignalleitung zwischen Abschlusseinheit und Lokalbusmaster abschnittsweise auf einen Statussignalwert umgeschaltet wird, der die Kommunikationsbereitschaft der einzelnen Datenbusteilnehmer anzeigt. Dabei entspricht dieser Statussignalwert demjenigen, der von der Abschlusseinheit vorgegeben wird. Es kann aber auch sein, dass keine Abschlusseinheit am letzten Datenbusteilnehmer angeschlossen ist und der letzte Datenbusteilnehmer die Funktionalität der Abschlusseinheit übernimmt. Beispielsweise kann der letzte Datenbusteilnehmer, der feststellt, dass keine Abschlusseinheit verbunden ist, weil beispielsweise keine Verbindung zum Statussignaleingang hergestellt wurde, selbst einen entsprechenden ersten Statussignalwert an seinem Statussignalausgang ausgeben, auch wenn kein zweiter Statussignalwert am Statussignaleingang anliegt. In diesem Fall ist nur dafür Sorge zu tragen, dass der Datenbusteilnehmer Kenntnis darüber hat, dass dieser der letzte Datenbusteilnehmer ist und das Fehlen des ersten Statussignalwertes auf der Position des Datenbusteilnehmers beruht und nicht auf einem Fehler des nachgelagerten Datenbusteilnehmers. In einer weiteren Alternative ist auch vorstellbar, dass der letzte Datenbusteilnehmer über keinen Statussignaleingang verfügt, sondern nur über einen Statussignalausgang. Dieser spezielle Datenbusteilnehmer also immer der letzte Datenbusteilnehmer in einem Lokalbus ist.

In einer beispielhaften Ausführungsform des Datenbusteilnehmers kann der erste und der zweite Statussignalwert den gleichen diskreten Zustand annehmen, wenn der Datenbusteilnehmer und der nachgelagerte Datenbusteilnehmer kommunikationsbereit sind. Es kann auch gesagt werden, das Statussignal nimmt am Statussignaleingang und Statussignalausgang des Datenbusteilnehmers den gleichen Statussignalwert ein, wenn der Datenbusteilnehmer und der nachgelagerte Datenbusteilnehmer kommunikationsbereit sind. D.h. der Statussignalwert am Statussignaleingang eines Datenbusteilnehmers zeigt an, ob der nachgelagerte Datenbusteilnehmer beziehungsweise die nachgelagerten Datenbusteilnehmer kommunikationsbereit sind, wohingegen der Statussignalwert am Statussignalausgang des Datenbusteilnehmers anzeigt, ob auch der Datenbusteilnehmer kommunikationsbereit ist. Nehmen der erste und der zweite Statussignalwert den gleichen Wert an, so ist nicht nur der Datenbusteilnehmer kommunikationsbereit, sondern auch zwangslosgisch die nachgelagerten Datenbusteilnehmer. Die logische Verknüpfung des ersten Statussignalwertes (SSW1) am Statussignaleingang mit der Kommunikationsbereitschaft (KB) des Datenbusteilnehmers zur Erzeugung des zweiten Statussignalwertes (SSW2) am Statussignalausgang ist in Tabelle 1 zusammengefasst, wobei "T" für "*true*" und "F" für "*false*" steht. Diese Werte sind also boolesche Werte, die nur zwei Zustände annehmen können. Anstelle von true und false können hier auch die logischen Zustände High und Low oder Eins und Null verwendet werden, die über logische Operatoren der booleschen Algebra entsprechend der Tabelle 1 verknüpft werden können.

**Tabelle 1: logische Verknüpfung des ersten Statussignalwertes und der Kommunikationsbereitschaft**

| SSW1 | KB | SSW2 |
|---|---|---|
| F | F | F |
| F | T | F |
| T | F | F |
| **T** | **T** | **T** |

Somit wird eine bedingte Statussignalleitung aufgebaut, die bei Vollständigkeit anzeigt, dass alle Datenbusteilnehmer kommunikationsbereit sind, weil alle Datenbusteilnehmer des Lokalbusses am Statussignaleingang den gleichen Wert anliegen haben wie am Statussignalausgang, wie in Tabelle 1 gezeigt, haben dann alle Statussignalausgänge den gleichen logischen Wert. Gibt es eine Unterbrechung, so ändert sich an einem Datenbusteilnehmer dessen Statussignalwert am Statussignaleingang, wodurch es zu einer Änderung des Statussignalausgangs kommt. D.h. alle vor der Unterbrechung liegenden Datenbusteilnehmer ändern ihre Statussignalwerte, so dass festgestellt werden kann, dass der Lokalbus nicht mehr unterbrechungsfrei ist.

In einer beispielhaften Ausführungsform des Datenbusteilnehmers können der Statussignaleingang und der Statussignalausgang physikalisch getrennt von anderen Schnittstellen des Datenbusteilnehmers sein. In diesem Fall bildet die über die Statussignaleingänge und Statussignalausgänge definierte Statussignalleitung zwischen Abschlusseinheit oder letztem Datenbusteilnehmer und Lokalbusmaster eine vom Lokalbus separate Leitung aus, die nicht Teil des Lokalbusses ist. D.h. der Statussignalwert wird nicht über den Lokalbus gesendet. Der Lokalbus bleibt entsprechend frei von dieser Information und kann bereits vorab verwendet werden, um Daten zu bereits kommunikationsbereiten Datenbusteilnehmern zu transportieren.

In einer beispielhaften Ausführungsform des Datenbusteilnehmers kann dieser kommunikationsbereit sein, sobald der Datenbusteilnehmer taktsynchronisiert ist auf den Lokalbus. Alternativ oder zusätzlich kann auch eine Bedingung sein, dass eine Verarbeitungseinheit des Datenbusteilnehmers über den Lokalbus empfangene Daten verarbeiten kann. Dabei können die Daten beispielsweise in einem Telegramm / Datenpaket eines Zyklusrahmens empfangen werden. Der Zyklusrahmen durchläuft dabei einheitenweise, stückchenweise, oder Teile weise, zum Beispiel in Teilen oder Symbolen von 8 Bits, die Datenbusteilnehmer. D.h. zu jeder gegebenen Zeit hat ein Datenbusteilnehmer immer nur einen Teil des Zyklusrahmens vorliegen. Nach einer vorher bestimmten Zeit wird der dem Datenbusteilnehmer vorliegende Teil des Zyklusrahmens an den nachgelagerten Datenbusteilnehmer weitergeleitet und ein weiterer Teil des Zyklusrahmens von dem vorgelagerten Datenbusteilnehmer empfangen. Hierzu müssen die Datenbusteilnehmer eine einheitliche Zeitgebung beziehungsweise Taktung haben, auf die sie synchronisiert sind, damit das Empfangen und Weiterleiten der Teile des Zyklusrahmens immer zur gleichen Zeit geschieht. D.h. erst wenn die Datenbusteilnehmer taktsynchronisiert sind, so sind diese auch kommunikationsbereit. Die Taktsynchronität der Datenbusteilnehmer kann dabei durch Setzen eines Registerwertes / eines Flags angezeigt werden. Zusätzlich kann es für die Anzeige der Kommunikationsbereitschaft noch nötig sein, dass die Datenbusteilnehmer die Teile des Zyklusrahmens nicht nur Empfangen und Weiterleiten können, sondern dass diese auch in der Lage sind die Teile des Zyklusrahmens zu verarbeiten. D.h. wenn die im Datenbusteilnehmer befindliche Verarbeitungseinheit initialisiert ist und die Teile des Zyklusrahmens verarbeiten kann. Beispielsweise wenn der Datenbusteilnehmer ein erstes in einem Zyklusrahmen oder Telegramm / Datenpaket gesendetes nur einmal auftretendes Bitmuster erkennt, welches den Start des Zyklusrahmens oder eines Telegramms / Datenpaketes in einem Zyklusrahmen signalisiert oder andere signalisierte Daten erkennt, dann kann die Verarbeitungseinheit bereit sein Daten aus dem Telegramm / Datenpaket beziehungsweise dem Zyklusrahmen zu verarbeiten und entsprechend kann die Kommunikationsbereitschaft signalisiert werden. Dabei kann die Verarbeitungseinheit eine arithmetische-logische Einheit, eine Rechenschaltung, ein Mikrocontroller, oder eine andere digitale logische Schaltung sein, die als ein Teil eines Halbleiterchips ausgebildet ist und in einem integrierten Schaltkreis (*engl.* ASIC), oder in einer Feld programmierbaren (Logik-)Gatter-Anordnung (*engl.* FPGA), oder in einer anderen programmierbare Schaltung (*engl.* PLD), oder einer diskreten Gatter oder Transistorlogik implementiert ist. Ist die Verarbeitungseinheit noch nicht initialisiert, d.h. ist diese noch nicht in der Lage Verarbeitungen durchzuführen, so können die Daten beispielsweise mit Hilfe einer schaltbaren Bypassleitung an der Verarbeitungseinheit vorbei geleitet werden. Wenn die Verarbeitungseinheit in der Lage ist die Daten zu verarbeiten, also die empfangenen Teile des Zyklusrahmens zu verarbeiten, so kann der Teil des Telegramms / Datenpaketes durch die Verarbeitungseinheit geleitet werden, d.h. in diesem Fall wird die Bypassleitung nicht mehr benötigt. Der Datenbusteilnehmer kann dabei zumindest einen Schalter aufweisen, welcher zwischen der Bypassleitung und der Verarbeitungseinheit gesteuert umschaltet, sobald die Verarbeitungseinheit in der Lage ist Teile des Zyklusrahmens zu verarbeiten. Dieser Schalter kann ein elektronischer Schalter sein, der durch ein von der Verarbeitungseinheit selbst abgegebenes Signal geschaltet werden kann und der zwischen der Bypassleitung und der Verarbeitungseinheit umschaltet. Sobald die Verarbeitungseinheit bereit ist Daten zu verarbeiten, so ist der Datenbusteilnehmer kommunikationsbereit. Der Datenbusteilnehmer kann in diesem Fall in der Lage sein, den zweiten Statussignalwert zu ändern in Abhängigkeit von dem ersten Statussignalwert.

In einer beispielhaften Ausführungsform des Datenbusteilnehmers kann dieser ein Steuermittel zum Ändern eines Widerstandswertes am Statussignalausgang aufweisen, wobei durch die Änderung des Widerstandswertes eine Änderung des Statussignalwertes bewirkt wird beziehungsweise durch die Widerstandswertänderung überhaupt eine Weitergabe des zweiten Statussignalwertes an den vorgelagerten Datenbusteilnehmer möglich ist. Der Statussignaleingang eines Datenbusteilnehmers stellt dabei einen ersten Widerstandswert bereit, beispielsweise über einen Pull-UP Widerstand, der den Statussignaleingang auf einem bestimmten Spannungsniveau hält. Erst mit Änderung des Widerstandes am Statussignalausgang des nachgelagerten Datenbusteilnehmers nimmt der Statussignaleingang den Statussignalwert des nachgelagerten Datenbusteilnehmers an. Hierdurch wird eine gezielte Statussignalwertweitergabe ermöglicht, ohne dass es Zeitspannen gibt, in denen es unbestimmte Zustandsmeldungen gibt, weil zu jeder gegebenen Zeit ein Zustand für den Statussignaleingang definiert ist. Erst mit Änderung aller Statussignalausgänge auf entsprechende Widerstandswerte zur Weiterleitung der Statussignalwerte erhält der Lokalbusmaster das Statussignal und kann feststellen, dass der Lokalbus vollständig ist und alle am Lokalbus angeschlossenen Datenbusteilnehmer kommunikationsbereit sind. Das heißt, erst wenn alle Datenbusteilnehmer im Lokalbus ihre Widerstandswerte der Statussignalausgänge geändert haben, so liegt das Statussignal vom letzten Datenbusteilnehmer oder der Abschlusseinheit bis zum Lokalbusmaster an. Tritt bei einem Datenbusteilnehmer ein Fehler auf, so liegt das Statussignal nicht mehr vom letzten Datenbusteilnehmer oder der Anschlusseinheit bis zum Lokalbusmaster an. In diesem Fall liegt also eine Unterbrechung der Statussignalleitung vor. Selbst wenn die dem unterbrechenden Datenbusteilnehmer nachgelagerten Datenbusteilnehmer das Statussignal durchleiten, beziehungsweise ihre Statussignalausgänge alle auf einen vordefinierten Zustand setzen und die Statussignalausgänge Widerstandswerte annehmen, die eine Durchleitung des Statussignals erlauben, so wird das Statussignal an dem unterbrechenden Datenbusteilnehmer gestoppt. Dieser unterbrechende Datenbusteilnehmer setzt nämlich seinen Statussignalausgang nicht auf einen definierten Zustand und der Statussignalausgang nimmt nicht einen bestimmten Widerstandswert an, so dass der vorgelagerte Datenbusteilnehmer nicht das Statussignal empfangen kann und dementsprechend auch nicht seinen eignen Statussignalausgang ändert. Das heißt, ab dem unterbrechenden Datenbusteilnehmer sind die Statussignalausgänge nicht geändert in Bezug auf den bereitgestellten Zustand und den Widerstandswert. Dies erlaubt es einfach zu überprüfen, ob ein Lokalbus vollständig ist beziehungsweise die Datenbusteilnehmer alle kommunikationsbereit sind.

In einer beispielhaften Ausführungsform des Datenbusteilnehmers kann das Steuermittel angepasst sein den Widerstandswert von dem Statussignalausgang von einem ersten Wert auf einen zweiten Wert zu ändern. Beim ersten Wert wird dabei beispielsweise kein Statussignal übertragen und beim zweiten Wert wird das Statussignal übertragen. Dabei ist der Betrag der Änderung des Wertes des Widerstandes des Statussignalausgangs abhängig von dem Wert des Widerstandes des Statussignaleingangs des vorgelagerten Datenbusteilnehmers. Beispielsweise ist der erste Wert größer als der Widerstandswert von dem Statussignaleingang des vorgelagerten Datenbusteilnehmers und der zweite Wert kleiner als der Widerstandswert von dem Statussignaleingang des vorgelagerten Datenbusteilnehmers, so dass das Statussignal übertragen werden kann.

In einer beispielhaften Ausführungsform kann der Datenbusteilnehmer am Statussignaleingang einen Pull-UP Widerstand aufweisen. Dieser sorgt dafür, dass bei keinem Anschluss eines Statussignalausgangs eines nachgelagerten Datenbusteilnehmers, der Statussignaleingang auf einem bestimmten Zustand gehalten wird, beispielsweise einer logischen Eins. Erst wenn ein nachgelagerter Datenbusteilnehmer angeschlossen wird und der Widerstandswert des Statussignalausgangs des nachgelagerten Datenbusteilnehmers geändert wird im Vergleich zum Pull-UP Widerstand, so ändert sich der Zustand des Statussignaleingangs, nämlich auf den des Statussignalausgangs des nachgelagerten Datenbusteilnehmers. Der Datenbusteilnehmer kann entsprechend den Widerstand seines Statussignalausgangs ändern, wenn der Datenbusteilnehmer kommunikationsbereit ist und auch der nachgelagerte Datenbusteilnehmer kommunikationsbereit ist. Die Änderung des Wertes des Statussignalausgangs bewirkt dann beim vorgelagerten Datenbusteilnehmer, dass der Pull-UP Widerstand am Statussignaleingang nicht den durch den Pull-UP Widerstand erzeugten logischen Zustand anzeigt, sondern den Zustand des Statussignalausgangs des Datenbusteilnehmers und so weiter. Beispielsweise kann der Pull-UP Widerstand am Statussignaleingang der Datenbusteilnehmer dazu ausgelegt sein, den Zustand des Statussignaleingangs auf einer logischen Eins zu halten, so lange der Statussignalausgang des nachgelagerten Datenbusteilnehmers hochohmig ist im Vergleich zum Pull-UP Widerstand. Hochohmig kann dabei auch heißen, dass kein Datenbusteilnehmer angeschlossen ist. Erst wenn ein Datenbusteilnehmer angeschlossen ist, und dieser mit Hilfe des Steuermittels den Widerstandswert des Statussignalausgangs auf einen Wert ändert, der kleiner ist als der Pull-UP Widerstand, so ändert sich der Zustand des Statussignaleingangs des Datenbusteilnehmers. Der Lokalbusmaster kann in diesem Fall aus einer Zustandsänderung an seinem Statussignaleingang schließen, dass der Lokalbus vollständig ist und/oder alle Datenbusteilnehmer kommunikationsbereit sind. Dem Fachmann ist bewusst, dass der Datenbusteilnehmer anstelle des Pull-UP Widerstandes auch einen Pull-DOWN Widerstand aufweisen kann und dass sich die oben diskutierte Logik in diesem Fall negiert also umgekehrt.

In einer beispielhaften Ausführungsform kann das Steuermittel unabhängig von einer Verarbeitungseinheit im Datenbusteilnehmer ausgeführt sein. Die Änderung des Widerstandswertes des Statussignalausgangs kann damit unabhängig vom Status einer im Datenbusteilnehmer vorhandenen Verarbeitungseinheit geschehen. Das Steuermittel kann dabei beispielsweise dazu ausgelegt sein, die Verarbeitungseinheit zu überwachen und wenn das Steuermittel die Einsatzbereitschaft der Verarbeitungseinheit feststellt, so kann das Steuermittel den Widerstandswert des Statussignalausgangs entsprechend ändern, um zu signalisieren, dass der Datenbusteilnehmer kommunikationsbereit ist.

In einer beispielhaften Ausführungsform kann das Steuermittel als Bestandteil einer im Datenbusteilnehmer angeordneten Verarbeitungseinheit ausgeführt sein. Die Änderung des Widerstandswertes des Statussignalausgangs ist damit abhängig von der Einsatzbereitschaft der Verarbeitungseinheit selbst.

In einer beispielhaften Ausführungsform kann der Datenbusteilnehmer angepasst sein während des Betriebes des Lokalbusses auf dem Lokalbus angeordnet zu werden. Hierzu kann der Statussignalausgang mit einem Statussignaleingang eines vorgelagerten Datenbusteilnehmers verbunden werden und der Statussignaleingang kann mit einem Statussignalausgang des nachgelagerten Datenbusteilnehmers verbunden werden. Erst wenn der neu hinzugefügte Datenbusteilnehmer kommunikationsbereit ist, kann das Steuermittel im Datenbusteilnehmer den Widerstandswert am Statussignalausgang ändern, um so das an seinem Statussignaleingang anliegende Statussignal - vorausgesetzt die nachgelagerten Datenbusteilnehmer sind bereits kommunikationsbereit und ein Statussignal liegt am Statussignaleingang an - am Statussignalausgang bereitzustellen und an den Statussignaleingang des vorgelagerten Datenbusteilnehmers weiterzuleiten.

Beispielhaft ist auch ein Verfahren zum Betreiben eines Datenbusteilnehmers verbunden mit einem Lokalbus, insbesondere einem Ringbus, beschrieben. Das Verfahren kann dabei aufweisen das Empfangen eines ersten Statussignalwertes von einem nachgelagerten Datenbusteilnehmer oder einer Abschlusseinheit an dem Datenbusteilnehmer, Bereitstellen eines zweiten Statussignalwertes an einen vorgelagerten Datenbusteilnehmer oder einen Lokalbusmaster durch den Datenbusteilnehmer, wobei das Bereitstellen aufweist logisches Verknüpfen von einer Kommunikationsbereitschaft des Datenbusteilnehmers und des ersten Statussignalwertes zum Bereitstellen des zweiten Statussignalwertes.

Beispielhaft ist auch ein Lokalbus beschrieben, wobei der Lokalbus aufweisen kann, zumindest einen Datenbusteilnehmer aufweisend einem Statussignaleingang und einen Statussignalausgang. Der Lokalbus kann weiter eine Abschlusseinheit aufweisen, die zumindest einen Statussignalausgang aufweist. Der Statussignalausgang der Abschlusseinheit und der Statussignaleingang des Datenbusteilnehmers können verbunden sein und die Abschlusseinheit kann angepasst sein an ihrem Statussignalausgang einen ersten Statussignalwert bereitzustellen, der am Statussignaleingang des Datenbusteilnehmers empfangen wird. Der Datenbusteilnehmer kann angepasst sein einen zweiten Statussignalwert an dem Statussignalausgang bereitzustellen, basierend auf der Kommunikationsbereitschaft des Datenbusteilnehmers selbst und dem am Statussignaleingang des Datenbusteilnehmers empfangenen ersten Statussignalwertes, der die Kommunikationsbereitschaft der nachgelagerten Datenbusteilnehmer anzeigt. Die hier genannte Abschlusseinheit kann auch ein weiterer Datenbusteilnehmer sein, der als letzter Datenbusteilnehmer im Lokalbus angeordnet ist und der die Funktionalität der Abschlusseinheit übernimmt. D.h. der letzte Datenbusteilnehmer kann an seinem Statussignalausgang einen Statussignalwert bereitstellen der anzeigt, dass der Datenbusteilnehmer kommunikationsbereit ist, auch wenn kein Statussignalwert am Statussignaleingang des letzten Datenbusteilnehmers anliegt.

In einer beispielhaften Ausführungsform des Lokalbusses kann dieser weiter einen Lokalbusmaster aufweisen, der einen Statussignaleingang aufweisen kann, der angepasst sein kann zum Empfangen des zweiten Statussignalwertes bereitgestellt am Statussignalausgang des zumindest einen Datenbusteilnehmers. Der Lokalbusmaster kann dabei in der Lage sein die Vollständigkeit des Lokalbusses festzustellen, wenn sich der Statussignalwert ändert. In diesem Fall hat der Lokalbusmaster Kenntnis darüber, dass die mit dem Lokalbus verbundenen Datenbusteilnehmer allesamt kommunikationsbereit sind. Damit der Lokalbusmaster Kenntnis über die Identität der am Lokalbus angeschlossenen Datenbusteilnehmer erlangen kann, kann dieser nach Änderung des Statussignalwertes aber auch bereits vorher ein oder mehrere Telegramme / Datenpakete in einem Zyklusrahmen an die Datenbusteilnehmer senden, um die Datenbusteilnehmer zu identifizieren. Der Lokalbusmaster kann dabei eingerichtet sein eine Anzahl kommunikationsbereiter Datenbusteilnehmer zu zählen und für jeden gezählten kommunikationsbereiten Datenbusteilnehmer ein Telegramm / Datenpaket zur Informationsabfrage zu senden. Dabei kann der Lokalbusmaster angepasst sein ein einzelnes Telegramm / Datenpaket an alle Datenbusteilnehmer zu senden zum Abzählen der kommunikationsbereiten Datenbusteilnehmer in einer Reihenfolge, d.h. der Lokalbusmaster sendet zunächst ein einzelnes Telegramm / Datenpaket auf den Lokalbus. Jeder bereits kommunikationsbereite Datenbusteilnehmer kann bei Empfang des einzelnen Telegramms / Datenpaketes, den im Telegramm / Datenpaket enthaltenen Zähler ändern, beispielsweise diesen inkrementieren oder dekrementieren, bevor das Telegramm / Datenpaket beziehungsweise Teile des Telegramms / Datenpaketes an den nächsten Datenbusteilnehmer weiter gesendet wird. Noch nicht kommunikationsbereite Datenbusteilnehmer leiten das Telegramm / Datenpaket nur durch ohne den ersten Zähler zu ändern. Der letzte Datenbusteilnehmer leitet das Telegramm / Datenpaket zurück an den Lokalbusmaster. Anhand des Wertes des Zählers weiß der Lokalbusmaster anschließend, wie viele Datenbusteilnehmer des Lokalbusses bereits kommunikationsbereit sind. Der Lokalbusmaster kann eingerichtet sein das Senden des einzelnen Telegramms / Datenpaketes zum Abzählen der kommunikationsbereiten Datenbusteilnehmer so lange zu wiederholen, wie ein Zustand des zweiten Statussignalwertes am Statussignaleingang des Lokalbusmasters nicht einem Zustand des ersten Statussignalwertes an dem Statussignalausgang der Abschlusseinheit entspricht. Zur Informationsabfrage der Datenbusteilnehmer kann der Lokalbusmaster eine Anzahl von Telegrammen / Datenpaketen erzeugen. Dabei entspricht die Anzahl der Telegramme / Datenpakete der Anzahl von durch den ersten Zähler angezeigten kommunikationsbereiten Datenbusteilnehmern. Hat der erste Zähler beispielsweise angezeigt, dass es N kommunikationsbereite Datenbusteilnehmer gibt, so werden auch N Telegramme / Datenpakete erzeugt und auf dem Lokalbus gesendet, wobei N eine ganze natürliche Zahl ist. Anschließend wird die Anzahl von Telegrammen / Datenpaketen von dem Lokalbusmaster auf den Lokalbus gesendet. Jeweils eins der erzeugten Telegramme / Datenpakete ist für einen kommunikationsbereiten Datenbusteilnehmer bestimmt und ist diesem basierend auf der jeweiligen relativen Position des kommunikationsbereiten Datenbusteilnehmers innerhalb der Reihenfolge zugewiesen. Mit dieser Anzahl von Telegrammen / Datenpaketen ist dann entsprechend eine Informationsabfrage der Datenbusteilnehmer möglich, wobei jedes Telegramm / Datenpaket genau einem kommunikationsbereiten Datenbusteilnehmer zugewiesen ist, der beim Erkennen, dass das Telegramm / Datenpaket an den Datenbusteilnehmer gerichtet ist dieses mit Informationen füllt, die nach Durchlauf durch den Lokalbus vom Lokalbusmaster gelesen werden können.

### 4. Kurze Beschreibung der Zeichnungen

Die Erfindung wird nachfolgend anhand von Ausführungsbeispielen mit den beigefügten Zeichnungen näher erläutert. Aus dem beschriebenen Ausführungsbeispielen ergeben sich weitere Einzelheiten, Merkmale und Vorteile des Gegenstands der Erfindung. Es zeigen:
- Fig. 1: ein schematisches Blockdiagramm einer beispielhaften Automatisierungsanlage mit einer speicherprogrammierbaren Steuerung, einem übergeordneten Bus, und mehreren beispielhaften Datenbusteilnehmern;
- Fig. 2: ein schematisches Blockdiagramm mit zumindest zwei beispielhaften Datenbusteilnehmern;
- Fig. 3: ein schematisches Blockdiagramm der zumindest zwei beispielhaften Datenbusteilnehmern wie in Figur 2 gezeigt mit einem Pull-UP Widerstand am Statussignaleingang und einem Steuermittel am Statussignaleingang; und
- Fig. 4: ein schematisches Spannungsdiagramm eines beispielhaften Datenbusteilnehmers.

### 5. Beschreibung bevorzugter Ausführungsbeispiele

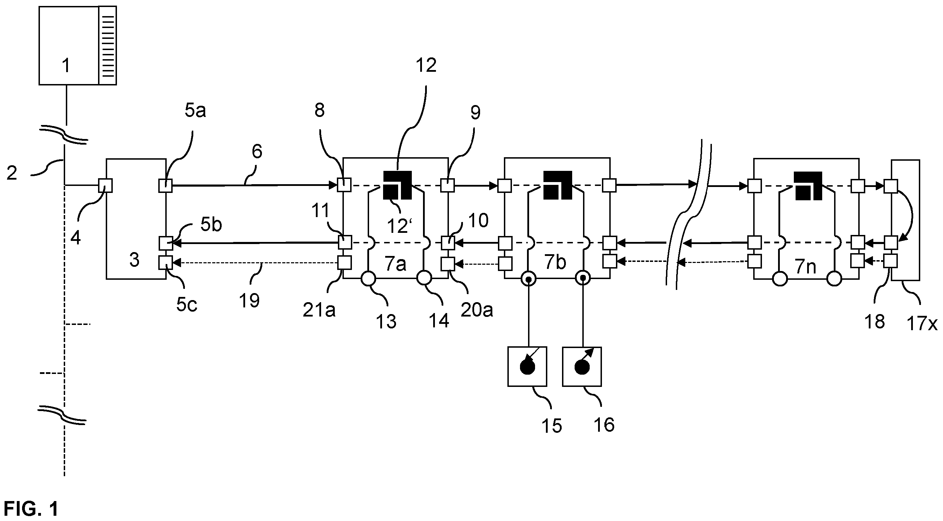

Figur 1 zeigt ein schematisches Blockdiagramm einer Automatisierungsanlage. Es wird vom Fachmann verstanden werden, dass die gezeigte Automatisierungsanlage nur beispielhaft ist und alle zu der Automatisierungsanlage gehörenden Elemente, Module, Bauteile, Teilnehmer und Einheiten verschieden ausgestaltet sein können aber dennoch die hier beschriebenen Grundfunktionalitäten erfüllen können.

Die in Figur 1 gezeigte Automatisierungsanlage weist eine übergeordnete Steuerung 1 auf, die beispielsweise mit einer speicherprogrammierbaren Steuerung, SPS, realisiert werden kann. Eine derartige SPS 1 dient grundsätzlich zur Steuerung und Regelung des von der Automatisierungsanlage ausgeführten Prozesses. Heutzutage übernehmen SPSs 1 in Automatisierungsanlagen allerdings auch weitergehende Funktionen, wie zum Beispiel die Visualisierung, Alarmierung und Aufzeichnung aller den Prozess betreffenden Daten und als solche fungiert die SPS 1 als eine Mensch-Maschine Schnittstelle. Es gibt SPS 1 in unterschiedlichen Leistungsklassen, die unterschiedliche Ressourcen (Rechenkapazität, Speicherkapazität, Anzahl und Art von Ein- und Ausgängen, und Schnittstellen) aufweisen, die es der SPS 1 ermöglichen den Prozess der Automatisierungsanlage zu steuern und zu regeln. Eine SPS 1 hat zumeist einen modularen Aufbau und besteht aus einzelnen Komponenten, die jeweils eine andere Aufgabe erfüllen. Üblicherweise besteht eine SPS 1 aus einer zentralen Rechenbaugruppe (mit einem oder mehreren Hauptprozessoren und Speichermodulen) und mehreren Baugruppen mit Eingängen und Ausgängen. Derartige modular aufgebaute SPS 1 lassen sich durch Hinzufügen von Baugruppen leicht erweitern. Hierbei hängt es von der Komplexität des Prozesses und der Komplexität des Aufbaus der Automatisierungsanlage ab, welche Baugruppen in der SPS 1 integriert sein müssen. In heutigen Automatisierungsanlagen ist die SPS 1 auch zumeist kein unabhängiges System mehr, sondern die SPS 1 ist über entsprechende Schnittstellen - hier nicht dargestellt - mit dem Internet oder Intranet verbunden. Dies bedeutet, die SPS 1 ist Teil eines Netzwerks über welches oder von welchem die SPS 1 Informationen, Instruktionen, Programmierungen etc. erhalten kann. Zum Beispiel kann die SPS 1 über eine Verbindung zu einem sich im Intranet oder Internet befindlichen Computer Informationen über dem Prozess zugeführte Materialien bekommen, so dass beispielsweise durch die Kenntnis deren Anzahl oder Beschaffenheit der Prozess optimal gesteuert werden kann. Es ist auch denkbar, dass die SPS 1 durch einen Zugriff aus dem Intranet oder Internet von einem Anwender gesteuert wird. So kann beispielsweise ein Anwender mit Hilfe eines Computers, auch Leitrechner genannt, auf die SPS 1 zugreifen und deren Anwenderprogrammierung überprüfen, ändern, oder korrigieren. Dementsprechend ist der Zugriff auf die SPS 1 von einer oder mehreren Fernwarten oder Leitstellen möglich. Die Leitrechner können gegebenenfalls Visualisierungseinrichtungen zur Darstellung von Prozessabläufen haben.

Zur Steuerung des Prozesses der Automatisierungsanlage ist die SPS 1 mit Automatisierungsgeräten verbunden. Um den Verdrahtungsaufwand gering zu halten werden für diese Verbindungen Bussysteme verwendet. In dem in Figur 1 gezeigten Ausführungsbeispiel ist die SPS 1 mittels eines übergeordneten Busses 2, der in dem hier gezeigten Ausführungsbeispiel ein Feldbus sein kann, mit einem Lokalbusmaster 3 eines untergeordneten Lokalbussystems verbunden. An den übergeordneten Bus 2 können aber nicht nur wie in dem hier gezeigten Ausführungsbeispiel ein Lokalbusmaster 3 eines Lokalbusses angeschlossen werden, sondern auch andere beliebige Teilnehmer - hier nicht gezeigt -, die zur Kommunikation mit der SPS 1 ausgestaltet sind.

Der übergeordnete Bus 2 ist in dem hier gezeigten Ausführungsbeispiel mit dem Lokalbusmaster 3 verbunden. Hierzu weist der Lokalbusmaster 3 eine erste Schnittstelle 4 auf, die derart ausgelegt ist, dass diese mit dem übergeordneten Bus 2 verbunden werden kann. Die Schnittstelle 4 kann hierzu beispielsweise eine Aufnahme in Form einer Buchse aufweisen und der übergeordnete Bus 2 kann einen Stecker aufweisen, der von der Buchse aufgenommen werden kann. Dabei können der Stecker und die Buchse zum Beispiel ein Modularstecker und eine Modularbuchse sein, d.h. jede Ader des übergeordneten Busses 2 wird mit einer Verbindung in der Modularbuchse elektrisch oder optisch verbunden. Dem Fachmann sind aber auch andere Möglichkeiten bekannt, wie eine Schnittstelle 4 auszulegen ist, so dass der Lokalbusmaster 3 elektrisch oder optisch mit dem übergeordneten Bus 2 verbunden werden kann. Dem Fachmann sind dabei, Schraub-, Dreh-, Klick- oder Steckverbindungen bekannt, mit deren Hilfe sich eine elektrische oder optische Verbindung herstellen lassen kann. Dabei wird zumeist ein männlicher Stecker von einem weiblichen Gegenstück aufgenommen. Diese Aufnahme stellt zumeist nicht nur die elektrische oder optische Verbindung her, sondern sorgt auch dafür, dass die beiden Teile mechanisch gekoppelt werden und nur mit Aufwendung einer bestimmten Kraft wieder voneinander gelöst werden können. Es ist aber auch denkbar, dass der übergeordnete Bus 2 fest mit der Schnittstelle 4 verdrahtet ist.

Der Lokalbusmaster 3 in dem hier gezeigten Ausführungsbeispiel weist eine weitere zweite Schnittstelle auf, um den Lokalbusmaster 3 mit dem Lokalbus zu verbinden, wobei der Lokalbus in dem hier gezeigten Ausführungsbeispiel als ein Ringbus 6 ausgestaltet ist. In diesem Fall teilt sich die zweite Schnittstelle in einen ersten Teil 5a und einen zweiten Teil 5b auf. Der erste Teil 5a der zweiten Schnittstelle stellt die Abwärtsverbindung im Ringbus 6 her und der zweite Teil 5b der zweiten Schnittstelle stellt die Aufwärtsverbindung im Ringbus 6 her.

Der Ringbus 6, dessen Datensenderichtung mit Pfeilen in dem in Figur 1 gezeigten Ausführungsbespiel gezeigt ist, weist in dem hier gezeigten Ausführungsbeispiel mehrere Datenbusteilnehmer 7a, 7b,..., 7n auf. Diese Datenbusteilnehmer 7a, 7b,..., 7n weisen in dem hier gezeigten Ausführungsbeispiel jeweils eine Schnittstelle 8 auf, um Daten von einem vorgelagerten oder vorangehenden Datenbusteilnehmer 7a, 7b,..., 7n zu empfangen. Im Fall von Datenbusteilnehmer 7a, empfängt dieser über die Schnittstelle 8 Daten von dem vorgelagerten Lokalbusmaster 3. Des Weiteren weisen die Datenbusteilnehmer 7a, 7b,..., 7n in dem hier gezeigten Ausführungsbeispiel jeweils eine Schnittstelle 9 auf, um Daten an einen nachgelagerten oder nachfolgenden Datenbusteilnehmer 7a, 7b,..., 7n weiterzuleiten. In Fall von Datenbusteilnehmer 7a sendet dieser Daten an den nachgelagerten Datenbusteilnehmer 7b über die Schnittstelle 9. Die Schnittstellen 8 und 9 dienen dabei zum Propagieren von Daten in Abwärtsrichtung des Ringbusses 6, d.h. von dem Lokalbusmaster 3 weg. Des Weiteren weisen die Datenbusteilnehmer 7a, 7b,..., 7n in diesem Ausführungsbeispiel auch Schnittstellen 10 und 11 auf, zum Propagieren von Daten in Aufwärtsrichtung des Ringbusses 6, d.h. zum Lokalbusmaster 3 hin. Im Fall des Datenbusteilnehmers 7a ist Schnittstelle 10 dabei dazu ausgelegt, Daten von dem nachgelagerten oder nachfolgenden Datenbusteilnehmer 7b zu empfangen und Schnittstelle 11 ist dazu ausgelegt, Daten an den vorgelagerten oder vorangehenden Datenbusteilnehmer, hier den Lokalbusmaster 3, weiterzuleiten. Es kann also auch gesagt werden, dass die Schnittstellen 9 und 11 Senderschnittstellen sind, wohingegen die Schnittstellen 8 und 10 Empfängerschnittstellen sind.

In dem hier gezeigten Ausführungsbeispiel werden die Verbindungen der Schnittstellen und der SPS 1 beziehungsweise den Datenbusteilnehmern 7a, 7b,..., 7n mit Hilfe von Kabeln oder Leiterplatten und/oder zur direkten oder indirekten Kontaktierung mittels elektrischen Kontakten realisiert. Eine andere Alternative ist, dass die einzelnen Verbindungen kabellos hergestellt werden, und die Schnittstellen die notwendigen Umsetzungen auf die verwendeten Funkstandards bereitstellen.

Auch wenn der Lokalbusmaster 3 und die einzelnen Datenbusteilnehmer 7a, 7b,..., 7n in dem hier gezeigten Ausführungsbeispiel voneinander beabstandet gezeigt sind, der Lokalbusmaster 3 also dezentral angeordnet ist von den Datenbusteilnehmern 7a, 7b,..., 7n, ist dem Fachmann bewusst, dass die Datenbusteilnehmer 7a, 7b,..., 7n und der Lokalbusmaster 3 - der auch ein Datenbusteilnehmer des Ringbusses 6 darstellt - auch direkt miteinander verbunden werden können. Dabei können beispielsweise Kontakte des einen Datenbusteilnehmers in entsprechende Aufnahmen oder Aufnahmekontakte eines direkt benachbarten Datenbusteilnehmers greifen, um so eine elektrische Verbindung zwischen den Datenbusteilnehmern herzustellen, damit Daten in Abwärts- und Aufwärtsrichtung gesendet werden können. Beispielsweise können die Datenbusteilnehmer 7a, 7b,...,7n an der dem Master abgewandten Seite Aufnahmen und an der dem Master zugewandten Seite Kontakte aufweisen. Werden die Datenbusteilnehmer 7a, 7b,...,7n dann entsprechend aneinandergereiht, so greifen die Kontakte des einen Datenbusteilnehmers 7a, 7b,..., 7n jeweils in die Aufnahmen des anderen Datenbusteilnehmers 7a, 7b,..., 7n ein und es kann eine elektrische Verbindung erzeugt werden. Der Lokalbusmaster 3 weist dann entsprechend Kontakte an der Seite auf, die in die Aufnahmen des ersten Datenbusteilnehmers 7a greifen, um so zwischen den Schnittstellen 5a und 8 beziehungsweise den Schnittstellen 5b und 11 eine elektrische Verbindung zu erzeugen. Dem Fachmann sind aber auch noch andere Möglichkeiten, z.B. Druckkontakte, Messer- und Gabelkontakte bekannt, wie zwei direkt aneinander angeordnete Datenbusteilnehmer 7a, 7b,..., 7n eine elektrische oder auch optische Verbindung mittels entsprechender Komponenten herstellen können.

Im Falle dessen, dass die Datenbusteilnehmer 7a, 7b,..., 7n und der Lokalbusmaster 3 direkt miteinander verbunden werden sollen, können diese auch mechanische Aufnahmen oder mechanische Befestigungsmittel aufweisen, mit denen die einzelnen Datenbusteilnehmer 7a, 7b,..., 7n und der Lokalbusmaster 3 miteinander verbunden werden können. Hierbei kann zum Beispiel ein Datenbusteilnehmer 7a, 7b,..., 7n an einer Seite einen Vorsprung aufweisen und an der anderen Seite eine Hinterschneidung aufweisen. Werden die Datenbusteilnehmer 7a, 7b,..., 7n dann aneinandergereiht, so greift ein Vorsprung in eine Hinterschneidung des anderen Datenbusteilnehmers 7a, 7b,..., 7n ein, so dass eine mechanische Kopplung entsteht. Zur einfachen Aneinanderreihung der Datenbusteilnehmer 7a, 7b,..., 7n können diese auch auf einer gemeinsamen Aufnahme, zum Beispiel einer Hutschiene angeordnet werden. Zur Befestigung auf der Hutschiene können die Datenbusteilnehmer 7a, 7b,..., 7n entsprechende Befestigungsmittel aufweisen. Alternativ oder zusätzlich können die Datenbusteilnehmer 7a, 7b,..., 7n auch beispielsweise lösbar verbindbare Befestigungsmittel aufweisen, mit denen die Datenbusteilnehmer 7a, 7b,..., 7n entweder an der Hutschiene oder an einer anderen Aufnahme befestigt werden können. Dazu kann das lösbar verbindbare Befestigungsmittel austauschbar sein und ein entsprechendes Befestigungsmittel für die gewünschte Aufnahme kann mit den Datenbusteilnehmern 7a, 7b,..., 7n verbunden werden, so dass diese an der gewünschten Aufnahme befestigt werden können.

Des Weiteren weisen die Datenbusteilnehmer 7a, 7b,..., 7n in dem in Figur 1 gezeigten Ausführungsbeispiel auch eine Verarbeitungseinheit 12 auf. Diese Verarbeitungseinheit 12 kann eine arithmetische-logische Einheit sein oder eine andere Art von Rechenwerk sein mit dessen Hilfe Daten verarbeitet werden können. Die Verarbeitungseinheit 12 ist vorzugsweise ein integraler Bestandteil des Datenbusteilnehmers 7a, 7b,..., 7n, um eine besonders schnelle und zeitlich synchronisierte Bearbeitung der Daten sicherzustellen.

Die Verarbeitungseinheit 12 kann auch als Gesamtschaltung des Datenbusteilnehmers bezeichnet werden. D.h. die Verarbeitungseinrichtung 12 empfängt Daten über die Eingänge 8 und 10 und gibt Daten auf den Ausgängen 9 und 11 aus. Des Weiteren kann die Verarbeitungseinrichtung 12 Daten von den Ein-/und Ausgängen 13 und 14 empfangen beziehungsweise ausgeben. Weiterhin hat die Verarbeitungseinheit 12 Zugriff auf einen Speicher 12' des Datenbusteilnehmers 7a, 7b, ..., 7n in dem beispielsweise Daten, Prozessdaten, oder Instruktionslisten gespeichert sind.

Die Verarbeitungseinheit 12 kann dazu ausgelegt sein, empfangene Daten zu verarbeiten und Daten auszugeben. Empfangen werden können zu verarbeitende Daten entweder von einem vorgelagerten Datenbusteilnehmer oder von Eingängen 13 des Datenbusteilnehmers 7a, 7b,..., 7n. Dabei können die Eingänge 13 des Datenbusteilnehmers 7a, 7b,..., 7n mit Sensoren 15 verbunden sein, die zum Beispiel Messdaten, Zustandsdaten, etc. senden. Ausgegeben werden können verarbeitete Daten entweder an einen nachgelagerten Datenbusteilnehmer oder an Ausgängen 14 des Datenbusteilnehmers 7a, 7b,..., 7n. Dabei können die Ausgänge 14 des Datenbusteilnehmers 7a, 7b,..., 7n mit Aktoren 16 verbunden sein, die zum Beispiel mit Hilfe der an sie gerichteten Daten eine bestimmte Aktion durchführen. Wenn in Aufwärtsrichtung auch eine Verarbeitung der Daten stattfinden soll, so können Daten auch von einem nachgelagerten Datenbusteilnehmer 7a, 7b, ..., 7n empfangen werden und verarbeitete Daten an einen vorgelagerten Datenbusteilnehmer 7a, 7b, ..., 7n gesendet werden.

Einfachheitshalber sind in dem hier gezeigten Ausführungsbeispiel die Datenbusteilnehmer 7a, 7b,..., 7n nur mit einem Eingang 13 und einem Ausgang 14 gezeigt und auch nur Datenbusteilnehmer 7b ist mit Sensor 15 und Aktor 16 verbunden. Es ist dem Fachmann aber bewusst, dass die Datenbusteilnehmer 7a, 7b,..., 7n eine Vielzahl von Ein- und Ausgängen 13 und 14 aufweisen können, und mit einer Vielzahl von unterschiedlichen Sensoren 15 und Aktoren 16 verbunden werden können. Dabei ist das die Sensoren 15 charakterisierende Merkmal, dass die Sensoren 15 Daten aufnehmen und an den Datenbusteilnehmer 7a, 7b,..., 7n senden, wohingegen Aktoren 16 Daten von den Datenbusteilnehmern 7a, 7b,..., 7n empfangen und basierend auf diesen Daten eine Aktion ausführen.

Alternativ können die Schnittstellen 8, 9, 10 und 11 in einer Moduleinheit integriert sein und die Datenbusteilnehmer 7a, 7b, 7n auf diese Moduleinheit aufgesteckt werden können. Die Moduleinheiten können auch als Basiselemente des Ringbusses 6 bezeichnet werden. Die Ringbusinfrastruktur wird dabei durch die Moduleinheiten aufgebaut und die Datenbusteilnehmer 7a, 7b,..., 7n sind auswechselbar, so dass der Ringbus 6 mit beliebigen Datenbusteilnehmern 7a, 7b,..., 7n aufgebaut werden kann. Mit Hilfe der Moduleinheiten ist auch sichergestellt, dass auch wenn ein Datenbusteilnehmer 7a, 7b,..., 7n entfernt wird, die Kommunikation zwischen den restlichen Datenbusteilnehmern 7a, 7b,..., 7n nicht unterbrochen wird, weil die Kommunikation über die noch vorhandenen Moduleinheiten geschieht.

Die in diesem Ausführungsbeispiel gezeigten Datenbusteilnehmer 7a, 7b,..., 7n werden auf Grund ihrer Ein- und Ausgänge 13, 14, die mit Sensoren 15 beziehungsweise Aktoren 16 verbunden werden können, auch häufig als E/A-Module bezeichnet. Auch wenn die Datenbusteilnehmer 7a, 7b,..., 7n in dem hier gezeigten Ausführungsbeispiel als räumlich getrennt von den Sensoren 15 beziehungsweise Aktoren 16 dargestellt sind, so können die Sensoren 15 beziehungsweise Aktoren 16 auch in dem E/A-Modul integriert sein.

Der in dem hier gezeigten Ausführungsbeispiel gezeigte Ringbus 6 basiert auf einer Zyklusrahmenkommunikation. Dabei werden von dem Lokalbusmaster 3 beispielsweise Telegramme /Datenpakete in einem Zyklusrahmen generiert, die einen Kopfteil, einen Prozessdatenteil oder Informationsdatenteil und einen Prüfsummenteil aufweisen. Der eine Zyklusrahmen oder die mehreren Zyklusrahmen werden von dem Lokalbusmaster 3 in Abwärtsrichtung an den ersten Datenbusteilnehmer 7a des Ringbusses 6 gesendet. Dieser empfängt einen ersten Teil des Zyklusrahmens über die Schnittstelle 8. Ein derartiger Teil des Zyklusrahmens wird im Folgenden auch als Stück oder Einheit oder Symbol bezeichnet. Der Datenbusteilnehmer 7a führt dann eine Verarbeitung des Teils aus, und leitet den Teil dann an den nächsten Datenbusteilnehmer 7b über Schnittstelle 9 weiter, vorzugsweise gleichzeitig empfängt der erste Datenbusteilnehmer 7a einen zweiten Teil des Zyklusrahmens usw. Die Größe der Teile des Zyklusrahmens, also die Stückelung des Zyklusrahmens, hängt dabei von der Aufnahmekapazität der Datenbusteilnehmer 7a, 7b, ..., 7n ab, beispielsweise können zur Verarbeitung gleichzeitig eine feste Anzahl von Bits, beispielsweise 8 Bits des Zyklusrahmens am Datenbusteilnehmer 7a, 7b, ..., 7n vorliegen.

Der Zyklusrahmen durchläuft dementsprechend einheitenweise, stückchenweise, oder Teile weise, zum Beispiel in Teilen oder Symbolen von 8 Bits, die Datenbusteilnehmer 7a, 7b, ..., 7n sowie die hier gezeigte Abschlusseinheit 17x. Der Teil des Zyklusrahmens, welcher vom letzten Datenbusteilnehmer, in dem hier gezeigten Ausführungsbeispiel Datenbusteilnehmer 7n, verarbeitet worden ist, wird von der Abschlusseinheit 17x von der Schnittstelle 9 des Datenbusteilnehmers 7n auf dessen Schnittstelle 10 geleitet, so dass dieser Teil des Zyklusrahmens den Ringbus 6 wieder in Aufwärtsrichtung durchlaufen kann, d.h. wieder in Richtung des Lokalbusmasters 3. Dabei durchlaufen alle Teile des Zyklusrahmens wieder die jeweiligen Datenbusteilnehmer 7y, 7b, ..., 7n des Ringbusses 6. Alternativ können die Teile des Zyklusrahmens auch mit Hilfe einer Bypassleitung - hier nicht gezeigt - an allen Datenbusteilnehmern 7a, 7b, ..., 7n vorbei an den Lokalbusmaster 3 geleitet werden.

Wenn die Teile des Zyklusrahmens in Aufwärtsrichtung erneut durch alle Datenbusteilnehmer 7a, 7b,..., 7n geleitet werden, so können diese erneut verarbeitet werden von den Datenbusteilnehmern 7a, 7b,..., 7n, so dass der Zyklusrahmen zweimal verarbeitet werden kann, einmal auf der Abwärtsrichtung zum letzten Datenbusteilnehmer 7n und einmal in Aufwärtsrichtung zum Lokalbusmaster 3. Beispielsweise kann in Aufwärtsrichtung eine Verarbeitung durch Signalauffrischung und/oder Phasenschiebung erfolgen.

Bei der Verarbeitung der Zyklusrahmen in Abwärtsrichtung, d.h. von dem Lokalbusmaster 3 weg, oder in Aufwärtsrichtung, d.h. zum Lokalbusmaster 3 hin, wird die Verarbeitung mit Hilfe von Instruktionslisten bewerkstelligt, wobei die Instruktionslisten Sätze von Instruktionen beinhalten, die von der Verarbeitungseinheit 12 der Datenbusteilnehmer 7a, 7b,..., 7n ausgeführt werden können. Die Instruktionslisten selbst können den einzelnen Datenbusteilnehmern 7a, 7b,..., 7n in einer Initialisierungsphase vom Lokalbusmaster 3 zugesandt werden oder vorteilhaft während der laufenden Kommunikation den Datenbusteilnehmern 7a, 7b, ..., 7n zugesandt werden, so dass eine Programmierung der Datenbusteilnehmer 7a, 7b,..., 7n ohne Unterbrechung der Kommunikation stattfindet.

Welche der Instruktionslisten die Datenbusteilnehmer 7a, 7b,..., 7n verwenden sollen kann den Datenbusteilnehmern 7a, 7b, ..., 7n anhand von einem Instruktionslistenindex mitgeteilt werden. Dieser Instruktionslistenindex informiert den Datenbusteilnehmer darüber, welche gespeicherte Instruktionsliste verwendet werden soll. Ein Instruktionslistenindex ist also einer Instruktionsliste zugeordnet oder umgekehrt, so dass mit Hilfe des Instruktionslistenindexes die zu verwendende Instruktionsliste identifiziert werden kann. Hierzu weist der Instruktionslistenindex bevorzugt einen Wert auf, der zugeordnet ist zu einer Instruktionsliste, beispielsweise weist der Wert auf eine bestimmte Instruktionsliste hin oder auf deren Speicherplatz. Dazu kann der Wert selbst die Speicheradresse sein, wo die Instruktionsliste gespeichert ist oder wo zumindest eine erste Instruktion der Instruktionsliste gespeichert ist. Alternativ oder zusätzlich kann der Wert auch auf einen Speicherbereich hinweisen, in dem die entsprechende Instruktionsliste abgespeichert ist. In den zuvor genannten Fällen kann auch von einer direkten Zuordnung gesprochen werden. Der Wert des Instruktionslistenindex kann beispielsweise aber auch verwendet werden, als Eingabe einer Umsetzungstabelle *(engl.* Lookup-Tabelle, LUT). Dabei ist der Wert des Instruktionslistenindex der Eingangswert der Umsetzungstabelle. Der Ausgangswert der Umsetzungstabelle kann die Speicheradresse der ersten Instruktion in der zugehörigen Instruktionsliste sein oder anderweitig die Instruktionsliste identifizieren. Die Umsetzungstabelle kann softwaretechnisch sowie hardwaretechnisch in Form von beispielsweise Logiken hinterlegt sein und eine eineindeutige Umsetzung von einem Eingangswert in einen Ausgangswert angeben, wobei der Ausgangswert einen Hinweis auf die zu verwendende Instruktionsliste gibt. Dabei hängt es von der Umsetzungstabelle ab, wie ein Zusammenhang zwischen dem Instruktionslistenindex und der Instruktionsliste hergestellt wird. Bei der Verwendung einer Umsetzungstabelle kann auch von einer indirekten Zuordnung gesprochen werden. Bei der direkten sowie indirekten Zuordnung ist aber über den Instruktionslistenindex die von dem Datenbusteilnehmer zu verwendende Instruktionsliste eineindeutig identifizierbar, d.h. auffindbar. Der Instruktionslistenindex kann vor den zu verarbeitenden Prozessdaten in den Zyklusrahmen eingefügt werden, so dass die Datenbusteilnehmer 7a, 7b, ..., 7n entsprechend der Reihenfolge der Prozessdaten im Zyklusrahmen die entsprechende Instruktionsliste verwenden können. Die Instruktionslisten weisen dabei Instruktionen auf, die an die Reihenfolge der Prozessdaten im Zyklusrahmen angepasst sind. Die Instruktionslisten können dabei beispielsweise für Prozessdaten, die nicht an den Datenbusteilnehmer 7a, 7b, ..., 7n gerichtet sind eine "SKIP" Instruktion aufweisen, also den Datenbusteilnehmer 7a, 7b, ..., 7n anweisen den entsprechenden Teil des Zyklusrahmens zu überspringen, wohingegen die Instruktionsliste für Prozessdaten, die an den Datenbusteilnehmer 7a, 7b, ..., 7n gerichtet sind entsprechende Instruktionen zur verarbeiten der Prozessdaten aufweisen kann. Die Verarbeitung der Prozessdaten kann damit entkoppelt werden von der tatsächlichen Position der Prozessdaten im Zyklusrahmen, da die Datenbusteilnehmer mit Hilfe der Instruktionslisten angepasst werden an die Reihenfolge der Prozessdaten im Zyklusrahmen.

Wie bereits oben beschrieben zeigt das Ausführungsbeispiel der Figur 1 die Abschlusseinheit 17x, die mit Datenbusteilnehmer 7n verbunden ist. Die Abschlusseinheit 17x verbindet die Schnittstellen 9 und 10 des Datenbusteilnehmers 7n, so dass der in Abwärtsrichtung geleitete Zyklusrahmen wieder durch alle Datenbusteilnehmer 7a, 7b, ..., 7n in umgekehrter Reihenfolge an den Lokalbusmaster 3, also in Aufwärtsrichtung, gesendet werden. Der Zyklusrahmen beziehungsweise die Teile des Zyklusrahmens können in Aufwärtsrichtung dabei erneut von den Datenbusteilnehmern 7a, 7b, ..., 7n verarbeitet werden oder können ohne weitere Verarbeitung nur durch die Datenbusteilnehmer 7a, 7b, ..., 7n geschleift werden. Die Abschlusseinheit 17x stellt des Weiteren an ihrem Statussignalausgang 18 ein Statussignal bereit, welches einen vorher definierten Statussignalwert aufweist. Dieses Statussignal beziehungsweise der Statussignalwert der Abschlusseinheit 17x wird am Datenbusteilnehmer 7n an dessen Statussignaleingang 20n empfangen. Wenn der Datenbusteilnehmer 7n kommunikationsbereit ist, also wenn der Datenbusteilnehmer 7n taktsynchronisiert ist mit dem Lokalbus 6 und die Verarbeitungseinheit 12n in der Lage ist Teile des Zyklusrahmens zu verarbeiten, dann ändert der Datenbusteilnehmer 7n seinen Statussignalwert an seinem Statussignalausgang 21n auf einen Statussignalwert, der die Kommunikationsbereitschaft anzeigt. Dabei kann der Statussignalwert beispielsweise vor der Kommunikationsbereitschaft ein Low-Zustand annehmen und nach der Herstellung der Kommunikationsbereitschaft ein High-Zustand annehmen. Der Statussignalwert kann also dementsprechend von einer logischen Null auf eine logische Eins gesetzt werden. Dem Fachmann ist aber bewusst, dass auch andere Zustände oder Statussignalwerte definiert werden können, die die Kommunikationsbereitschaft anzeigen. Es ist nur wichtig, dass es einen Wechsel des Statussignalwertes am Statussignalausgang gibt, wenn die Kommunikationsbereitschaft hergestellt ist. Alternativ zu der hier dargestellten Abschlusseinheit 17x kann auch der Datenbusteilnehmer 7n selbst die Funktionalität der Abschlusseinheit 17x übernehmen. D.h. wenn der Datenbusteilnehmer 7n feststellt, dass dieser der letzte Datenbusteilnehmer des Lokalbusses 6 ist und feststellt, dass keine Abschlusseinheit 17x angeschlossen ist, so kann der Datenbusteilnehmer 7n selbst die auf der Abwärtsrichtung empfangenen Teile des Zyklusrahmens wieder in Aufwärtsrichtung senden. Der Datenbusteilnehmer 7n kann dementsprechend angepasst sein in diesem Fall eine Verbindung zwischen der Schnittstelle 9 und der Schnittstelle 10 herzustellen. Des Weiteren kann der Datenbusteilnehmer 7n in diesem Fall angepasst sein, an seinem Statussignalausgang 21n nach Herstellung seiner Kommunikationsbereitschaft einen Statussignalwertwechsel durchzuführen, auch wenn kein Statussignalwert an seinem Statussignaleingang 20n anliegt.

Mit der Änderung des Statussignalwertes am Statussignalausgang 21n liegt am Datenbusteilnehmer 7b an dessen Statussignaleingang 20b ein Statussignalwert an, der anzeigt, dass der Datenbusteilnehmer 7n kommunikationsbereit ist. Da dieser Statussignalwert der gleiche Statussignalwert ist, der von der Abschlusseinheit 17x ausgegeben wird - wenn diese vorhanden ist -, kann auch gesagt werden, dass das Statussignal durch den Datenbusteilnehmer 7n geleitet wird, wenn dieser kommunikationsbereit ist. Entsprechend wird das Statussignal auch durch die anderen Datenbusteilnehmer 7a, 7b geleitet, wenn diese kommunikationsbereit sind. Sind alle Datenbusteilnehmer 7a, 7b, ..., 7n kommunikationsbereit, so kann gesagt werden, dass eine Statussignalleitung zwischen der Abschlusseinheit 17x mit deren Statussignalausgang 18 und dem Lokalbusmaster 3 mit dessen Statussignaleingang 5c besteht. Diese Statussignalleitung kann physikalisch eine Leitung sein, die durch Schalter oder Koppler eine elektrische oder optische Verbindung zwischen dem Statussignalausgang 18 und dem Statussignaleingang 5c herstellt. Diese Statussignalleitung kann das originär von dem Statussignalausgang 18 stammende Signal an den Statussignaleingang 5c leiten. Wie bereits oben beschrieben, kann diese Signalleitung auch nur eine Verbindung zwischen dem Statussignalausgang 21n des letzten Datenbusteilnehmers 7n und dem Statussignaleingang 5c darstellen, nämlich in dem Fall, in dem keine Abschlusseinheit 17x vorhanden ist. Alternativ zu dem herstellen einer physikalischen Verbindung, kann die Signalleitung auch nur organisatorisch bestehen und jeder Datenbusteilnehmer 7a, 7b, ..., 7n fungiert als Repeater des an seinem Statussignaleingang 20a, 20b, ..., 20n anliegenden Statussignalwertes und erzeugt den gleichen Statussignalwert an seinem Statussignalausgang 21a, 21b, ..., 21n, wenn der Datenbusteilnehmer 7a, 7b, ..., 7n kommunikationsbereit ist und der Statussignalwert am Statussignaleingang 20a, 20b, ..., 20n anzeigt, dass die nachgelagerten Datenbusteilnehmer auch kommunikationsbereit sind. In diesem Fall kann auch von einer Statussignalleitung gesprochen werden, weil auch in diesem Fall der Statussignalwert des Statussignalausgangs 18 der Abschlusseinheit 17x beziehungsweise der Statussignalwert des Statussignalausgangs 21n des letzten Datenbusteilnehmers 7n an den Statussignaleingang 5c des Lokalbusmasters 3 weitergeleitet wird, auch wenn keine direkte physikalische Verbindung zwischen dem Statussignalausgang 18 der Abschlusseinheit 17x beziehungsweise dem Statussignalausgang 21n des Datenbusteilnehmers 7n und dem den Statussignaleingang 5c des Lokalbusmasters 3 besteht. In dem Fall einer nur organisatorischen Statussignalleitung kann auch davon gesprochen werden, dass eine physikalische Verbindung nur zwischen jeweils zwei Datenbusteilnehmern 7a, 7b, ..., 7n besteht aber keine physikalische Verbindung zwischen allen Datenbusteilnehmern 7a, 7b, ..., 7n.

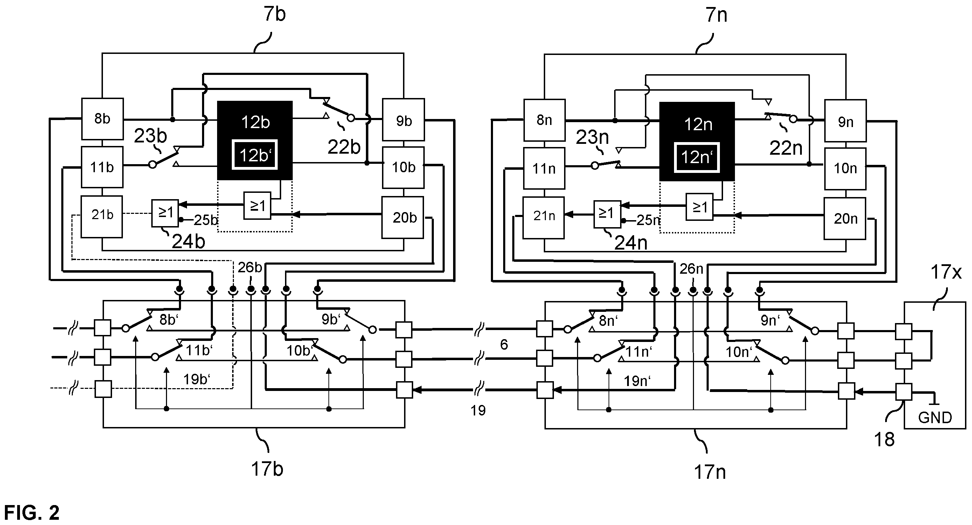

Auch wenn die Statussignalleitung in dem hier gezeigten Ausführungsbeispiel ähnlich wie der Lokalbus 6 dargestellt ist, so ist die Statussignalleitung separat vom Lokalbus 6. D.h. das Statussignal wird nicht über eine Busleitung, die ausgelegt ist Daten zu tragen, propagiert. In Figur 2 ist diese Trennung im Detail gezeigt.

Figur 2 zeigt ein schematisches Blockdiagramm mit zwei beispielhaften Datenbusteilnehmern 7b und 7n aus dem Lokalbus 6 entsprechend Figur 1. Die Datenbusteilnehmer 7b und 7n sind in dem hier gezeigten Beispiel mit Basiselementen 17b und 17n verbunden, die die Infrastruktur für den Lokalbus 6 und die Statussignalleitung 19 herstellen. Die Basiselemente 17b und 17n weisen dabei schaltbare Verbindungen für die Abwärtsrichtung und Aufwärtsrichtung von Daten auf. Hierzu weist beispielsweise das Basiselement 17b die Schalter 8b', 9b', 11b' und 10b' auf. Mit den Schaltern 8b' und 9b' kann die Abwärtsrichtung an Daten entweder an den auf das Basiselement 17b gesteckten Datenbusteilnehmer 7b geleitet werden, oder kann durch das Basiselement 17b geleitet werden, wenn beispielsweise kein Datenbusteilnehmer 7b vorhanden ist. Die Aufwärtsrichtung an Daten kann mit den Schaltern 10b' und 11b' auch entweder durch den auf das Basiselement 17b gesteckten Datenbusteilnehmer 7b geleitet werden oder kann durch das Basiselement 17b geleitet werden, wenn beispielsweise kein Datenbusteilnehmer 7b vorhanden ist. Die Bezeichnung der Schalter ist dabei einhergehend mit der Bezeichnung der jeweiligen Schnittstellen 8b, 9b, 10b, und 11b am Datenbusteilnehmer 7b. So schaltet der Schalter 8b' des Basiselements 17b die Daten in Abwärtsrichtung auf die Schnittstelle 8b, der Schalter 9b' schaltet die Daten kommend von der Schnittstelle 9b des Datenbusteilnehmers 7b an das nachgelagerte Basiselement 17n. Der Schalter 10b' schaltet die Daten in Aufwärtsrichtung kommend von dem Basiselement 17n auf die Schnittstelle 10b des Datenbusteilnehmers 17b und der Schalter 11b' schaltet die Daten kommen von der Schnittstelle 11b des Datenbusteilnehmers 17b an das vorgelagerte Basiselement 17a - hier nicht gezeigt. Die Schalter 8b' 9b', 10b', und 11b' können dabei über eine Signaleingabe am Eingang 26b geschaltet werden. Diese Signaleingabe kann eine mechanische, elektrische oder optische Signaleingabe sein. Beispielsweise können die Schalter 8b' 9b', 10b', und 11b' schalten, wenn eine mechanische Verbindung zwischen dem Basiselement 7b und dem Datenbusteilnehmer 7b hergestellt wird. Es ist aber auch denkbar, dass die Schalter 8b' 9b', 10b', und 11b' erst durch eine von dem Datenbusteilnehmer 7a erzeugte elektrische oder optische Signaleingabe schalten. In dem hier gezeigten Ausführungsbeispiel sind die Basiselemente 17b und 17n jeweils mit den Datenbusteilnehmern 7b und 7n verbunden. In diesem Fall sind die Schalter 8b', 9b', 10b', 11b' sowie 8n', 9n', 1on', 11n' derart geschaltet, dass die Abwärtsrichtung und Aufwärtsrichtung der Daten jeweils so geleitet werden, dass diese an die jeweiligen Schnittstellen 8b, 9b, 10b, 11b sowie 8n, 9n, 10n, 11n der Datenbusteilnehmer 7b und 7n geleitet werden.

Die Datenbusteilnehmer 7b und 7n weisen des Weiteren selbst Schalter 22b, 23b und 22n, 23n auf. Mit Hilfe dieser Schalter 22b, 23b und 22n, 23n können Daten in Abwärtsrichtung sowie in Aufwärtsrichtung um die jeweiligen Verarbeitungseinheiten 12b und 12n vorbeigeleitet werden, wenn diese beispielsweise noch nicht in der Lage sind die entsprechenden Daten zu verarbeiten.

In dem hier gezeigten Ausführungsbeispiel ist die Verarbeitungseinheit 12n des Datenbusteilnehmers 7n bereits in der Lage Daten zu verarbeiten, wohingegen die Verarbeitungseinheit 12b des Datenbusteilnehmers 7b noch nicht in der Lage ist Daten zu verarbeiten.

Im Datenbusteilnehmer 7n ist der Schalter 22n so geschaltet, dass dieser die Schnittstelle 8n mit der Verarbeitungseinheit 12n verbindet, anstelle die Schnittstelle 8n direkt mit der Schnittstelle 9n, so dass Daten in Abwärtsrichtung durch die Verarbeitungseinheit 12n verarbeitet werden können. In Aufwärtsrichtung ist der Schalter 23n so geschaltet, dass dieser die Schnittstelle 10n mit der Verarbeitungseinheit 12n verbindet, anstelle die Schnittstelle 10n direkt mit der Schnittstelle 11n, so dass Daten in Aufwärtsrichtung durch die Verarbeitungseinheit 12n verarbeitet werden können.

In dem hier gezeigten Ausführungsbeispiel ist die Verarbeitungseinheit 12b des Datenbusteilnehmers 7b noch nicht in der Lage Daten zu verarbeiten. Dementsprechend sind die Schalter 22b und 23b derart geschaltet, dass die Daten um die Verarbeitungseinheit 12b herumgeleitet werden. In dem hier gezeigten Ausführungsbeispiel geschieht dies dadurch, dass die Schnittstelle 8b direkt mit der Schnittstelle 9b verbunden wird und die Schnittstelle 10b direkt mit der Schnittstelle 11b. Sobald die Verarbeitungseinheit 12b in der Lage ist Daten zu verarbeiten, werden die Schalter 22b und 23b geschaltet und in den Schaltzustand entsprechend des Datenbusteilnehmers 7n geschaltet, so dass Daten von der Verarbeitungseinheit 12b verarbeitet werden können.

Dem Fachmann ist bewusst, dass auch wenn hier in Aufwärtsrichtung eine erneute Verarbeitung der Daten gezeigt ist und diese bei Bereitschaft der Verarbeitungseinheiten 12b und 12n durch diese geleitet werden, dies nicht der Fall sein muss. Wenn in Aufwärtsrichtung keine Verarbeitung mehr stattfinden soll, so können die Schalter 23b und 23n immer derart geschaltet sein, dass die Schnittstellen 10b und 11b beziehungsweise 10n und 11n miteinander verbunden sind. Es ist auch denkbar, dass in diesem Fall die Schalter 23b und 23n entfallen und eine nicht schaltbare Verbindung zwischen den Schnittstellen 10b und 11b beziehungsweise 10n und 11n besteht. Es ist auch denkbar, dass in diesem Fall die Schalter 10b', 11b' und 10n', 11n' der Basiselemente 17b und 17n entfallen und die Aufwärtsrichtung direkt durch die Basiselemente geleitet werden.

Des Weiteren weisen die Basiselemente 17b und 17n einen Abschnitt der Signalleitung 19 auf, nämlich Abschnitte 19b' und 19n'. Die Signalleitung beginnt an der Anschlusseinheit 17x. Die Abschlusseinheit 17x legt an ihren Statussignalausgang 18 einen Statussignalwert an, in dem hier gezeigten Ausführungsbeispiel den Statussignalwert GND, dieser wird über das Basiselement 17n an den Statussignaleingang 20n des Datenbusteilnehmers 7n geleitet. Da der Datenbusteilnehmer 7n bereits kommunikationsbereit ist, d.h. dieser taktsynchronisiert ist auf die Daten auf dem Lokalbus 6 und die Verarbeitungseinheit 12n in der Lage ist Daten zu empfangen und zu verarbeiten, so dass die Schalter 22n und 23n nicht mehr eine Überbrückung der Verarbeitungseinheit 12n bereitstellen, wird an der logischen Verknüpfungseinheit 24n, der vom Statussignaleingang 20n kommende Statussignalwert mit einem diskreten Wert 25n verknüpft. Dieser diskrete Wert 25n wird von der Verarbeitungseinheit 12n erzeugt beziehungsweise auf einen bestimmten Wert gesetzt, sobald die Verarbeitungseinheit 12n kommunikationsbereit ist. Die logische Verknüpfungseinheit 24n ist dabei angepasst eine logische Verknüpfung des Statussignalwertes des Statussignaleingangs 20n und dem diskreten Wert 25n herzustellen. Dabei wird die Verknüpfung derart bewerkstelligt, dass nur wenn der Statussignalwert des Statussignaleingangs 20n anzeigt, dass die nachgelagerten Datenbusteilnehmer kommunikationsbereit sind - hier durch die Abschlusseinheit 17x vorgegeben - und der diskrete Wert 25n anzeigt, dass die Verarbeitungseinheit 12n kommunikationsbereit ist, so wird der Statussignalwert des Statussignalausgangs 21n des Datenbusteilnehmers 7n auf den gleichen Statussignalwert gesetzt, wie der Statussignalwert des Statussignaleingangs 20n des Datenbusteilnehmers 7n. Dieser Statussignalwert anliegend am Statussignalausgang 21n des Datenbusteilnehmers 7n wird dann an den vorgelagerten Datenbusteilnehmer 7b über die Basiselemente 17n und 17b geleitet.

Der Datenbusteilnehmer 7b empfängt in dem hier gezeigten Ausführungsbeispiel den Statussignalwert des Statussignalausgangs 21n des Datenbusteilnehmers 7n an seinem Statussignaleingang 20b. Da die Verarbeitungseinheit 12b des Datenbusteilnehmers 7b aber noch nicht kommunikationsbereit ist, und diese mit Hilfe der Schalter 22b und 23b noch überbrückt wird, ist der diskrete Wert 25b noch nicht auf einen Wert gesetzt, der die Kommunikationsbereitschaft anzeigt. D.h. die logische Verknüpfungseinheit 24b gibt am Statussignalausgang 21b des Datenbusteilnehmers 7b noch einen Statussignalwert aus, der anzeigt, dass der Datenbusteilnehmers 7b beziehungsweise dessen Verarbeitungseinheit 12b noch nicht kommunikationsbereit ist. D.h. es wird ein Statussignalwert ausgegeben, der abweicht von dem Statussignalwert empfangen am Statussignaleingang 20b des Datenbusteilnehmers 7b. Erst wenn der Datenbusteilnehmer 7b beziehungsweise dessen Verarbeitungseinheit 12b kommunikationsbereit ist wird der diskrete Wert 25b auf einen Wert gesetzt, der bei der logischen Verknüpfungseinheit 24b dafür sorgt, dass ein Statussignalwert an dem Statussignalausgang 21b des Datenbusteilnehmers 7b ausgegeben wird, der dem Statussignalwert des Statussignaleingangs 20b des Datenbusteilnehmers 7b entspricht. D.h. erst wenn alle Datenbusteilnehmer 7a, 7b, ..., 7n kommunikationsbereit sind, so wird über den Statussignaleingang 5c des Lokalbusmasters 3 der gleiche Statussignalwert empfangen, der von der Abschlusseinheit 17x beziehungsweise dem letzten Datenbusteilnehmer 7n erzeugt wurde. Der Lokalbusmaster 3 hat dann Kenntnis darüber, dass der Lokalbus 6 vollständig ist und alle Datenbusteilnehmer 7a, 7b, ..., 7n kommunikationsbereit sind. Der Lokalbusmaster 3 kann dann Telegramme/ Datenpakete auf den Lokalbus 6 senden, die zur Identifizierung der jeweiligen angeschlossenen Datenbusteilnehmer dienen. Der Lokalbusmaster 3 kann auch bereits während der Initialisierung des Lokalbusses 6, d.h. bevor der Lokalbusmaster 3 eine Änderung am Statussignaleingang 5c feststellt, derartige Telegramme / Datenpakete auf dem Lokalbus 6 senden, weil die Datenbusteilnehmer 7a, 7b, ..., 7n sukzessive kommunikationsbereit werden. Da die noch nicht kommunikationsbereiten Datenbusteilnehmer 7a, 7b, ..., 7n überbrückt werden, können die anderen bereits mit dem Lokalbusmaster 3 kommunizieren zum Austausch von Identitätsinformationen. Wenn der Statussignalwert sich am Statussignaleingang 5c des Lokalbusmasters 3 ändert, hat dieser aber Kenntnis darüber, dass der Lokalbus 6 vollständig ist und kann ein letztes Mal die entsprechenden Telegramme / Datenpakete senden, zum Identifizieren noch nicht identifizierter Datenbusteilnehmer 7a, 7b, ..., 7n.

Wenn auf einem der Basiselemente 17a, ..., 17n kein Datenbusteilnehmer 7a, 7b, ..., 7n angeordnet ist, kann auf diesem eine - hier nicht gezeigte Kappe - angeordnet sein, die die Signalleitung 19 für dieses Basiselement 17a, ..., 17n überbrückt, d.h. eine leitenden Verbindung herstellt. Ansonsten würde bei einem nicht vollständig besetzten Lokalbus 6, nie angezeigt werden, dass alle Datenbusteilnehmer 17a, ..., 17n kommunikationsbereit sind. Anstelle einer Kappe können die Basiselemente 17a, ..., 17n auch dazu ausgelegt sein selbstständig eine Überbrückung der Signalleitung 19 zu schaffen, wenn kein Datenbusteilnehmer 7a, 7b, ..., 7n vorhanden ist. Die Basiselemente 17a, ..., 17n können hierzu ein Mittel aufweisen, welches das Vorhandensein eines Datenbusteilnehmers 7a, 7b, ..., 7n erkennt und die Überbrückung entsprechend schaltet. Dabei kann die Überbrückung mechanisch oder elektrisch geschaltet werden. Beispielsweise kann beim Aufstecken des Datenbusteilnehmers 7a, 7b, ..., 7n dieser mit einer Geometrie angeordnet am Datenbusteilnehmer 7a, 7b, ..., 7n eine Mechanik in oder an dem jeweiligen Basiselement 17a, ..., 17n betätigen, so dass die Überbrückung aufgehoben wird und die Signalleitung 19 durch den Datenbusteilnehmer 7a, 7b, ..., 7n geleitet wird.

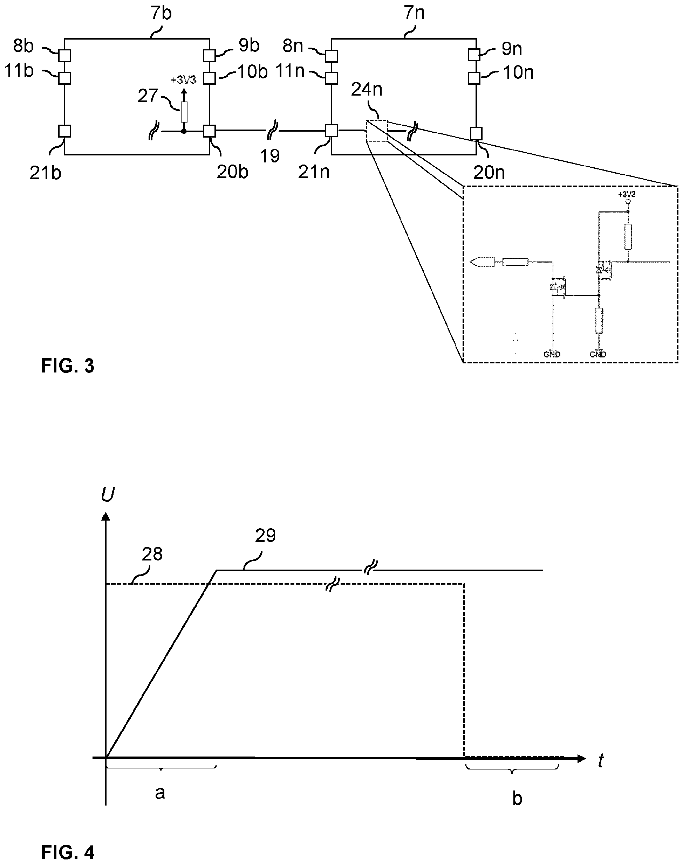

Figur 3 zeigt ein schematisches Blockdiagramm der zwei beispielhaften Datenbusteilnehmer 7b und 7n wie in Figur 2 gezeigt. Der Datenbusteilnehmer 7b weist dabei an seinem Statussignaleingang 20b einen Pull-UP Widerstand 27 auf. Dieser sorgt dafür, dass wenn der Statussignalausgang 21n des Datenbusteilnehmers 7n hochohmig ist, eine logische Eins am Statussignaleingang 20b anliegt. Erst beim Ändern des Widerstandswertes am Statussignalausgang 21n kann sich der logische Zustand ändern, nämlich auf den Zustand, der am Statussignalausgang 21n des Datenbusteilnehmers 7n bereitgestellt wird. Dieser bereitgestellte Zustand entspricht dem Statussignal des Datenbusteilnehmers 7n beziehungsweise dessen Statussignalwert. Ist der Datenbusteilnehmer 7n kommunikationsbereit, dann stellt dieser an seinem Statussignalausgang 21n ein Statussignal bereit, welches anzeigt, dass der Datenbusteilnehmer 7n kommunikationsbereit ist. Dabei ändert der Datenbusteilnehmer 7n den Widerstandswert des Statussignalausgangs 21n. War dieser zunächst hochohmig im Vergleich zum Pull-UP Widerstand 27 und wird auf niederohmig geändert, so liegt nicht mehr der durch den Pull-UP Widerstand gegebene logische Zustand am Statussignaleingang 20b an, sondern der logische Zustand des Statussignals des Statussignalausgangs 21n. Zum Beispiel kann der Pull-UP Widerstand 27 bei einem ersten Widerstandswert des Statussignalausgangs 21n dafür sorgen, dass der Statussignaleingang 20b einen logischen Zustand Eins hat, wohingegen das Statussignal eine logische Null aufweist. Da der Widerstandswert des Statussignalausgangs 21n aber noch hochohmiger ist als der Widerstand des Pull-UP Widerstandes 27 wird das Statussignal nicht am Statussignaleingang 20b empfangen. Erst wenn der Widerstandswert des Statussignalausgangs 21n sich auf niederohmig im Vergleich zum Pull-UP Widerstand 27 ändert, so wird das Statussignal an dem Statussignaleingang 20b empfangen und der logische Zustand ändert sich von Eins auf Null. Die Widerstandsänderung wird in dem hier gezeigten Ausführungsbeispiel mittels zweier separater MOSFETs bereitgestellt, wie in der Vergrößerung zu erkennen ist. Diese verbinden jeweils entweder einen hohen oder niedrigen Widerstand mit dem Statussignalausgang 21n, wobei die Widerstandswerte angepasst sind an den Pull-UP Widerstand 27. Es ist dem Fachmann aber durchaus bewusst, dass auch andere Möglichkeiten bestehen, eine entsprechende Widerstandsänderung vorzunehmen. Mit der Widerstandsänderung kann sichergestellt werden, dass es zu keinem Zeitpunkt undefinierte Zustände an den Statussignaleingängen gibt. Dies ist bei der kettenförmigen Weiterleitung des Statussignals besonders wichtig, da bereits ein Fehler an einem Datenbusteilnehmer in der Kette, die vorgelagerten Datenbusteilnehmer dazu veranlassen könnte, einen falschen Statussignalwert an ihren Statussignalausgängen bereitzustellen.

Figur 4 zeigt ein schematisches Spannungsdiagramm zweier Datenbusteilnehmer 7b und 7n. Dabei zeigt die Kurve 28 die Spannungscharakteristik am Statussignaleingang 20b des Datenbusteilnehmers 7b, während die Kurve 29 die Versorgungspannungscharakteristik des Datenbusteilnehmers 7n zeigt. Beim Einschalten der Versorgungspannung des Datenbusteilnehmers 7n ist zunächst über eine gewisse Zeit einen Anstieg zu erkennen - siehe Abschnitt a - bis die Versorgungsspannung den Wert für den normalen Betrieb angenommen hat. Während dieser Zeit wird die Spannung des Statussignaleingangs 20b durch den Pull-UP Widerstand 27 auf dem logischen Zustand Eins gehalten. Dies ist bedingt dadurch, dass der Datenbusteilnehmer 7n zu dieser Zeit noch nicht den Widerstandswert seines Statussignalausgangs 21n geändert hat. Ohne diese Widerstandswertaufrechterhaltung würde bereits beim Anstieg der Versorgungspannung die Spannung des Statussignaleingangs 20b einen ungewünschten Zustand annehmen. Die Widerstandswertaufrechterhaltung des Statussignalausgangs 21n sorgt aber dafür, dass der logische Zustand des Statussignaleingangs 20b konstant bleibt. Erst wenn der Datenbusteilnehmer 7n kommunikationsbereit ist, kommt es zu einer Widerstandswertänderung des Statussignalausgangs 21n des Datenbusteilnehmers 7n, was zu einer Änderung der Spannung am Statussignaleingang 20b des Datenbusteilnehmers 7b führt, also zu einer Änderung des logischen Zustands - siehe Abschnitt b. Auf diese Weise lässt sich ein Statussignal von einem an den anderen Datenbusteilnehmer 7a, 7b, ..., 7n bedingt weiterleiten, ohne das es zu ungewünschten Zuständen kommt.

### Bezugszeichenliste

- 1: speicherprogrammierbare Steuerung (SPS)
- 2: übergeordneter Bus
- 3: Lokalbusmaster
- 4: erste Schnittstelle
- 5a,b: zweite Schnittstelle
- 5c: Statussignaleingang des Lokalbusmaster
- 6: Ringbus
- 7a, b, n: Datenbusteilnehmer
- 8a, b, n: erste Abwärtsdatenschnittstelle
- 8a', b', n': erster Bypassschalter der Abwärtsrichtung
- 9a, b, n: zweite Abwärtsdatenschnittstelle
- 9a', b', n': zweiter Bypassschalter der Abwärtsrichtung
- 10a, b, n: erste Aufwärtsdatenschnittstelle
- 10a', b', n': erster Bypassschalter der Aufwärtsrichtung
- 11a, b, n: zweite Aufwärtsdatenschnittstelle
- 11a', b', n': zweiter Bypassschalter der Aufwärtsrichtung
- 12a, b, n: Verarbeitungseinheiten
- 12': Speicher
- 13, 14: Ein-/Ausgänge
- 15, 16: Sensor / Aktor
- 17a, b, n: Basiselemente
- 17x: Abschlusseinheit
- 18: Statussignalausgang der Abschlusseinheit
- 19: Statussignalleitung
- 19a', b', n': Abschnitte der Statussignalleitung
- 20a, b, n: Statussignaleingang der Datenbusteilnehmer
- 21a, b, n: Statussignalausgang der Datenbusteilnehmer
- 22a, b, n: Schalter der Abwärtsrichtung
- 23a, b, n: Schalter der Aufwärtsrichtung
- 24a, b, n: logische Verknüpfungseinheit
- 25a, b, n: diskreter Wert
- 26a, b, n: Eingang
- 27: Pull-UP Widerstand
- 28: Kurve der Spannungscharakteristik am Statussignaleingang
- 29: Kurve der Versorgungsspannung

## Patentansprüche

1. Ein Basiselement (17b, 17n) zum Verbinden eines Datenbusteilnehmers (7b, 7n) mit einem Lokalbus (6), aufweisend:
zumindest eine Schnittstelle zum elektrischen und mechanischen Verbinden mit einem Datenbusteilnehmer (7b, 7n);
zumindest eine schaltbare Verbindung, mit einem ersten Anschluss verbindbar mit dem Lokalbus (6) und einem zweiten Anschluss verbunden mit der Schnittstelle, wobei in einem ersten Schaltzustand Daten durch das Basiselement (17b, 17n) am Datenbusteilnehmer (7b, 7n) vorbei geleitet werden und wobei in einem zweiten Schaltzustand Daten an die Schnittstelle zum Datenbusteilnehmer (7b, 7n) geleitet werden oder Daten empfangen von dem Datenbusteilnehmer (7b, 7n) über die zumindest eine Schnittstelle auf den Lokalbus (6) gesendet werden, wobei der Lokalbus (6) als Ringbus ausgestaltet ist und das Basiselement (17b, 17n) konfiguriert ist Daten in Auf- und/oder Abwärtsrichtung zu leiten und wobei die Aufwärtsrichtung ungeschaltet durch das Basiselement (17b, 17n) geleitet wird.

2. Das Basiselement (17b, 17n) nach Anspruch 1, wobei die zumindest eine schaltbare Verbindung über eine Signaleingabe geschaltet wird, wobei die Signaleingabe eine mechanische ist, die schaltet, wenn eine mechanische Verbindung zwischen dem Basiselement (17b, 17n) und einem Datenbusteilnehmer (7b, 7n) hergestellt wird.

3. Das Basiselement (17b, 17n) nach Anspruch 1, wobei die zumindest eine schaltbare Verbindung über eine Signaleingabe geschaltet wird, die eine elektrische, oder optische Signaleingabe ist.

4. Das Basiselement (17b, 17n) nach einem der vorherigen Ansprüche, wobei das Basiselement (17b, 17n) zumindest zwei schaltbare Verbindungen aufweist.

5. Das Basiselement (17b, 17n) nach Anspruch 4, wobei eine erste schaltbare Verbindung der zumindest zwei schaltbaren Verbindungen einen ersten Anschluss aufweist, der mit einem Lokalbusmaster (3) oder einem vorgelagerten Basiselement (17b, 17n) verbindbar ist und einen zweiten Anschluss, der mit der Schnittstelle verbunden ist.

6. Das Basiselement (17b, 17n) nach Anspruch 4, wobei eine zweite schaltbare Verbindung der zumindest zwei schaltbaren Verbindungen einen ersten Anschluss aufweist, der mit einem nachgelagerten Basiselement (17b, 17n) oder einer Abschlusseinheit (17x) verbindbar ist und einen zweiten Anschluss, der mit der Schnittstelle verbunden ist.

7. Das Basiselement (17b, 17n) nach einem der vorhergehenden Ansprüche, weiter aufweisend eine Signalleitung (19) zum Durchleiten eines Statussignalwertes.

8. Ein System aufweisend:
zumindest ein Basiselement (17b, 17n), wobei das Basiselement (17b, 17n) aufweist:
zumindest einen ersten Anschluss verbindbar mit einem Lokalbus (6);
zumindest einen zweiten Anschluss verbindbar mit dem Lokalbus (6);
zumindest ein Schaltmittel; und
zumindest eine Schnittstelle zum elektrischen und mechanischen
Verbinden mit einem Datenbusteilnehmer (7b, 7n);
zumindest einen Datenbusteilnehmer (7b, 7n);
wobei das Schaltmittel in einem ersten Schaltzustand den ersten und zweiten Anschluss zusammenschaltet und Daten durch das Basiselement (17b, 17n)am Datenbusteilnehmer (7b, 7n) vorbei leitet und wobei das Schaltmittel in einem zweiten Schaltzustand den ersten und zweiten Anschluss mit der zumindest einen Schnittstelle verbindet, um Daten zum und vom Datenbusteilnehmer (7b, 7n) zu leiten, wobei der Lokalbus (6) als Ringbus ausgestaltet ist und das Basiselement (17b, 17n) konfiguriert ist Daten in Auf- und/oder Abwärtsrichtung zu leiten und wobei die Aufwärtsrichtung ungeschaltet durch das Basiselement (17b, 17n) geleitet wird.

9. Das System nach Anspruch 8, wobei das System zumindest zwei Basiselemente (17b, 17n) und zumindest zwei Datenbusteilnehmer (7b, 7n) aufweist, wobei der zweite Anschluss des ersten Basiselements (17b) mit dem ersten Anschluss des zweiten Basiselements (17n) direkt verbunden ist und die zwei Basiselemente (17b, 17n) den Lokalbus (6) bilden über den die zumindest zwei Datenbusteilnehmer (7b, 7n) Daten austauschen.

10. Das System nach einem der Ansprüche 8 und 9, wobei das zumindest eine Basiselement (17b, 17n) eine Signalleitung (19) aufweist zum Durchleiten eines Statussignalwertes.

11. Das System nach Anspruch 10, wobei der Datenbusteilnehmer (7b, 7n) angepasst ist den Statussignalwert auf der Signalleitung (19) in Abhängigkeit der Kommunikationsbereitschaft des Datenbusteilnehmers (7b, 7n) zu ändern.

12. Das System nach einem der Ansprüche 8 bis 11, weiter aufweisend eine Abschlusseinheit (17x).

## Claims

1. A base element (17b, 17n) for connecting a data bus subscriber (7b, 7n) to a local bus (6), comprising:
at least one interface for electrically and mechanically connecting to a data bus subscriber (7b, 7n);
at least one switchable connection connectable with a first port to the local bus (6) and a second port connected to the interface, wherein in a first switching state, data is conducted through the base element (17b, 17n) past the data bus subscriber (7b, 7n) and wherein in a second switching state, data is conducted to the interface to the data bus subscriber (7b, 7n) or data received from the data bus subscriber (7b, 7n) is sent via the at least one interface to the local bus (6), wherein the local bus (6) is configured as a ring bus and the base element (17b, 17n) is configured to conduct data in the up and/or down direction and wherein the up direction is conducted unswitched through the base element (17b, 17n).

2. The base element (17b, 17n) according to claim 1, wherein the at least one switchable connection is switched via a signal input, wherein the signal input is a mechanical one that switches when a mechanical connection is established between the base element (17b, 17n) and a data bus subscriber (7b, 7n).

3. The base element (17b, 17n) according to claim 1, wherein the at least one switchable connection is switched via a signal input that is an electrical or optical signal input.

4. The base element (17b, 17n) according to any one of the preceding claims,
wherein the base element (17b, 17n) comprises at least two switchable connections.

5. The base element (17b, 17n) according to claim 4, wherein a first switchable connection of the at least two switchable connections comprises a first port that is connectable to a local bus master (3) or a preceding base element (17b, 17n) and a second port that is connected to the interface.

6. The base element (17b, 17n) according to claim 4, wherein a second switchable connection of the at least two switchable connections comprises a first port that is connectable to a following base element (17b, 17n) or to a termination unit (17x) and a second port that is connected to the interface.

7. The base element (17b, 17n) according to any one of the preceding claims, further comprising a signal line (19) for passing a status signal value.

8. A system comprising:
at least one base element (17b, 17n), wherein the base element (17b, 17n) comprises:
at least one first port connectable to a local bus (6);
at least one second port connectable to the local bus (6);
at least one switching means; and
at least one interface for electrically and mechanically connecting to a data bus subscriber (7b, 7n);
at least one data bus subscriber (7b, 7n);
wherein the switching means, in a first switching state, interconnects the first and second port and conducts data through the base element (17b, 17n) past the data bus subscriber (7b, 7n) and wherein the switching means, in a second switching state, connects the first and second port to the at least one interface in order to conduct data to and from the data bus subscriber (7b, 7n), wherein the local bus (6) is configured as a ring bus and the base element (17b, 17n) is configured to conduct data in the up and/or down direction and wherein the up direction is conducted unswitched through the base element (17b, 17n).

9. The system according to claim 8, wherein the system comprises at least two base elements (17b, 17n) and at least two data bus subscribers (7b, 7n), wherein the second port of the first base element (17b) is directly connected to the first port of the second base element (17n) and the two base elements (17b, 17n) form the local bus (6) via which the at least two data bus subscribers (7b, 7n) exchange data.

10. The system according to any one of claims 8 and 9, wherein the at least one base element (17b, 17n) comprises a signal line (19) for passing a status signal value.

11. The system according to claim 10, wherein the data bus subscriber (7b, 7n) is adapted to change the status signal value on the signal line (19) depending on the communication readiness of the data bus subscriber (7b, 7n).

12. The system according to any one of claims 8 to 11, further comprising a termination unit (17x).

## Revendications

1. Élément de base (17b, 17n) pour relier un participant à un bus de données (7b, 7n) à un bus local (6), comportant :
au moins une interface destinée à être reliée électriquement et mécaniquement à un participant à un bus de données (7b, 7n) ;
au moins une liaison commutable, avec une première connexion pouvant être reliée au bus local (6) et une deuxième connexion reliée à l'interface, dans lequel dans un premier état de commutation des données sont acheminées au participant au bus de données (7b, 7n) via l'élément de base (17b, 17n), et dans lequel dans un deuxième état de commutation des données sont acheminées vers l'interface avec le participant au bus de données (7b, 7n), ou des données reçues par le participant au bus de données (7b, 7n) sont envoyées au bus local (6)par l'intermédiaire de l'au moins une interface, dans lequel le bus local (6) est configuré en bus en anneau et l'élément de base (17b, 17n) est configuré pour acheminer des données dans le sens ascendant et/ou le sens descendant, et dans lequel le sens ascendant transite de manière non commutée via l'élément de base (17b, 17n).

2. Élément de base (17b, 17n) selon la revendication 1, dans lequel l'au moins une liaison commutable est commutée par l'intermédiaire d'une entrée de signal, dans lequel l'entrée de signal est une entrée mécanique qui commute lorsqu'une liaison mécanique est établie entre l'élément de base (17b, 17n) et un participant au bus de données (7b, 7n).

3. Élément de base (17b, 17n) selon la revendication 1, dans lequel l'au moins une liaison commutable est commutée par l'intermédiaire d'une entrée de signal qui est une entrée de signal électrique ou optique.

4. Élément de base (17b, 17n) selon l'une des revendications précédentes, dans lequel l'élément de base (17b, 17n) comporte au moins deux liaisons commutables.

5. Élément de base (17b, 17n) selon la revendication 4, dans lequel une première liaison commutable des au moins deux liaisons commutables comprend une première connexion qui peut être reliée à un maître de bus local (3) ou à un élément de base en amont (17b, 17n), et une deuxième connexion qui est reliée à l'interface.

6. Élément de base (17b, 17n) selon la revendication 4, dans lequel une deuxième liaison commutable des au moins deux liaisons commutables comporte une première connexion qui peut être reliée à un élément de base en aval (17b, 17n) ou à une unité terminale (17X), et une deuxième connexion qui est reliée à l'interface.

7. Élément de base (17b, 17n) selon l'une des revendications précédentes, comportant en outre une ligne de signal (19) pour faire transiter une valeur de signal d'état.

8. Système comportant :
au moins un élément de base (17b, 17n), dans lequel l'élément de base (17b, 17n) comporte :
au moins une première connexion pouvant être reliée à un bus local (6) ;
au moins une deuxième connexion pouvant être reliée au bus local (6) ;
au moins un moyen de commutation ; et
au moins une interface destinée à être reliée électriquement et mécaniquement à un participant à un bus de données (7b, 7n) ;
au moins un participant à un bus de données (7b, 7n) ;
dans lequel dans un premier état de commutation le moyen de commutation relie entre eux la première et la deuxième connexion et achemine des données via l'élément de base (17b, 17n) via le participant au bus de données (7b, 7n), et dans lequel dans un deuxième état de commutation le moyen de commutation relie la première et la deuxième connexion à l'au moins une interface pour acheminer des données vers et depuis le participant au bus de données (7b, 7n), dans lequel le bus local (6) est configuré en bus en anneau et l'élément de base (17b, 17n) est configuré pour acheminer des données dans le sens ascendant et/ou dans le sens descendant, et dans lequel le sens ascendant transite de manière non commutée via l'élément de base (17b, 17n).

9. Système selon la revendication 8, dans lequel le système comporte au moins deux éléments de base (17b, 17n) et au moins deux participants à un bus de données (7b, 7n), dans lequel la deuxième connexion du premier élément de base (17b) est directement reliée à la première connexion du deuxième élément de base (17n) et les deux éléments de base (17b, 17n) forment le bus local (6), via lequel les au moins deux participants à un bus de données (7b, 7n) échangent des données.

10. Système selon l'une des revendications 8 et 9, dans lequel l'au moins un élément de base (17b, 17n) comporte une ligne de signal (19) pour faire transiter une valeur de signal d'état.

11. Système selon la revendication 10, dans lequel le participant au bus de données (7b, 7n) est apte à modifier la valeur du signal d'état sur la ligne de signal (19) en fonction de la disponibilité de communication du participant au bus de données (7b, 7n).

12. Système selon l'une des revendications 8 à 11, comportant en outre une unité terminale (17X).
